# EUROPEAN PATENT APPLICATION

(11) **EP 4 582 237 A1**
(43) Date of publication of application: **09.07.2025**
(21) Application number: 24221813.9
(22) Date of filing: 19.12.2024
(51) Int. Cl.: B29C 44/12, B29C 44/18, B29C 49/46, B29K 105/20

(54) **METHOD OF USING INJECTION MOLDING SYSTEM TO MANUFACTURE ARTICLE**

(30) Priority: 03.01.2024 US 202463617410 P; 30.09.2024 US 202418900906
(71) Applicant: King Steel Machinery Co., Ltd., Taichung City 407 (TW)
(72) Inventor: CHEN, CHING-HAO, Taichung City 407, Taiwan, R.O.C. (TW); LEE, YI-CHUNG, TTaichung City 407, Taiwan, R.O.C. (TW); YEH, LIANG-HUI, Taichung City 407, Taiwan, (R.O.C.) (TW)
(74) Representative: Michalski Hüttermann & Partner Patentanwälte mbB

(57) **Abstract**

A method of manufacturing an article includes providing a molding device having a first mold and a second mold; disposing a component between the first mold and the second mold, wherein the component includes a hollow space and an opening in communication with the hollow space; engaging the opening with the first mold or the second mold; and engaging the first mold with the second mold to form a mold cavity surrounding the component, wherein the opening is engaged with a feeding port of the molding device communicable with the hollow space. The method further includes injecting a molding material into the hollow space through the feeding port and the opening, wherein the molding material includes a polymeric material and a blowing agent; and foaming the molding material to form a foamed member. The foamed member is in contact with an inner surface of the component.

## Description

### CROSS-REFERENCE TO RELATED APPLICATION

This application claims priority of US patent application Ser. No. 18/900,906, filed on September 30, 2024, which claims priority of US patent provisional application Ser. No. 63/617,410, filed on January 03, 2024. Both of which are incorporated by reference in their entirety.

### TECHNICAL FIELD

The present invention is related to an article and a method of manufacturing the same, and, in particular, to an article including a foamed member in contact with a component and a method of manufacturing the same.

### BACKGROUND

Article including a foamed member and a component attached to at least a portion of the foamed member has many advantages, such as high strength, low weight, impact resistance, and others. The article can be made by adhere the foamed member and the component, as such, an adhesive is disposed between the foamed member and the component. However, there is a need for improvements to reliability of the article including the foamed member and the component and a method for manufacturing the article.

### BRIEF SUMMARY OF THE INVENTION

One purpose of the present invention is to provide an article and a method of manufacturing the same.

According to one embodiment of the present disclosure, a method of manufacturing an article is disclosed. The method includes providing a molding device having a first mold and a second mold; disposing a component between the first mold and the second mold, wherein the component includes a hollow space and an opening in communication with the hollow space; engaging the opening with the first mold or the second mold; and engaging the first mold with the second mold to form a mold cavity surrounding the component, wherein the opening is engaged with a feeding port of the molding device communicable with the hollow space. The method further includes injecting a molding material into the hollow space through the feeding port and the opening, wherein the molding material includes a polymeric material and a blowing agent; and foaming the molding material to form a foamed member. The foamed member is in contact with an inner surface of the component.

According to one embodiment of the present disclosure, method of manufacturing an article is disclosed. The method includes providing a molding device having a first mold and a second mold; disposing a component between the first mold and the second mold, wherein the component includes a hollow space and an opening in communication with the hollow space; engaging the opening with the first mold or the second mold; and engaging the first mold with the second mold to form a mold cavity surrounding the component, wherein the opening is engaged with a feeding port of the molding device communicable with the hollow space, the feeding port is disposed at a sidewall of the molding device, and the component is disposed within the mold cavity. The method further includes injecting a molding material into the hollow space through the feeding port and the opening; and foaming the molding material to form a foamed member. The hollow space is expanded within the mold cavity during the formation of the foamed member.

### BRIEF DESCRIPTION OF THE DRAWINGS

Aspects of the present disclosure are best understood from the following detailed description when read with the accompanying figures. It should be noted that, in accordance with the standard practice in the industry, various features are not drawn to scale. In fact, the dimensions of the various features may be arbitrarily increased or reduced for clarity of discussion.
FIG. 1 is a schematic diagram of an injection molding system according to one embodiment of the present invention.
FIG. 2 is a schematic diagram of a portion of an injection molding system in FIG. 1 according to one embodiment of the present invention.
FIG. 2A is an enlarged view of a portion of an injection molding system enclosed by a dash line in FIG. 2 according to one embodiment of the present invention.
FIG. 3 is a schematic diagram of an injection molding system according to one embodiment of the present invention.
FIG. 4 is a flowchart illustrating a method of manufacturing an article according to one embodiment of the present invention.
FIGS. 5A and 5B are flowcharts illustrating a method of manufacturing an article according to one embodiment of the present invention.
FIGS. 6-8 and FIGS. 11-15 are schematic diagrams illustrating exemplary operations for a method of manufacturing an article according to one embodiment of the present disclosure.
FIGS. 9 and 10 are schematic diagrams of a portion of the injection molding system according to one embodiment of the present disclosure.
FIGS. 16 and 17 are schematic diagrams of illustrating an exemplary article according to one embodiment of the present disclosure.
FIGS. 18 to 24 are schematic cross-sectional views illustrating exemplary operations in a method of manufacturing an article according to one embodiment of the present disclosure.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in the respective testing measurements. Also, as used herein, the term "about" generally means within 10%, 5%, 1%, or 0.5% of a given value or range. Alternatively, the term "about" means within an acceptable standard error of the mean when considered by one of ordinary skill in the art. Other than in the operating/working examples, or unless otherwise expressly specified, all of the numerical ranges, amounts, values and percentages, such as those for quantities of materials, durations of times, temperatures, operating conditions, ratios of amounts, and the likes thereof disclosed herein, should be understood as modified in all instances by the term "about." Accordingly, unless indicated to the contrary, the numerical parameters set forth in the present disclosure and the attached claims are approximations that can vary as desired. At the very least, each numerical parameter should be construed in light of the number of reported significant digits and by applying ordinary rounding techniques. Ranges can be expressed herein as from one endpoint to another endpoint or between two endpoints. All ranges disclosed herein are inclusive of the endpoints, unless specified otherwise.

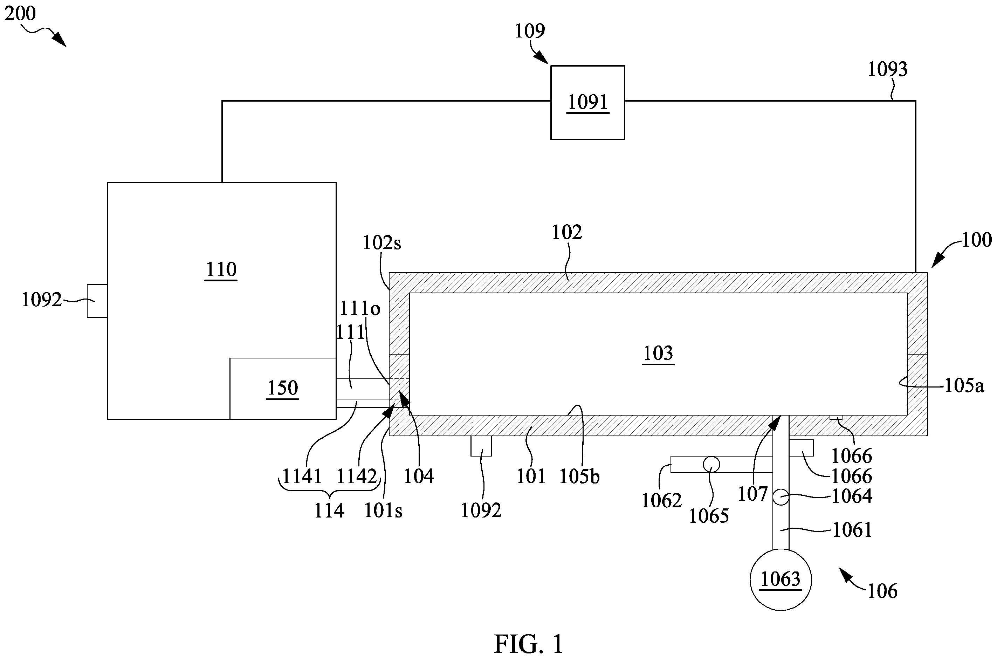

FIG. 1 is a schematic diagram view of an injection molding system 200 according to one embodiment of the present invention. The injection molding system 200 includes an extruding system 110 and a molding device 100 as shown in FIG. 1. The extruding system 110 is configured to produce a molding material of a polymeric material and a blowing agent. In some embodiments, the molding material is foamable or slightly foamable.

In some embodiments, the polymeric material includes a high molecular weight polymer. In some embodiments, the polymeric material includes ethylene vinyl acetate (EVA), styrene-ethylene-butylene-styrene (SEBS), thermoplastic polyurethanes (TPU), thermoplastic polyester elastomer (TPEE) or the like. In some embodiments, the polymeric material includes a foamable material. In some embodiments, the blowing agent is a physical or chemical additive that releases gas, thereby forming pores in the thus-obtained foamed polymeric article. In some embodiments, the blowing agent is a physical blowing agent. The physical blowing agent includes an atmospheric gas (e.g., nitrogen or carbon dioxide), a hydrocarbon, a chlorofluorocarbon, a noble gas, or a combination thereof. The blowing agent may be supplied in any flowable physical state, for example, a gas, a liquid, or a supercritical fluid (SCF).

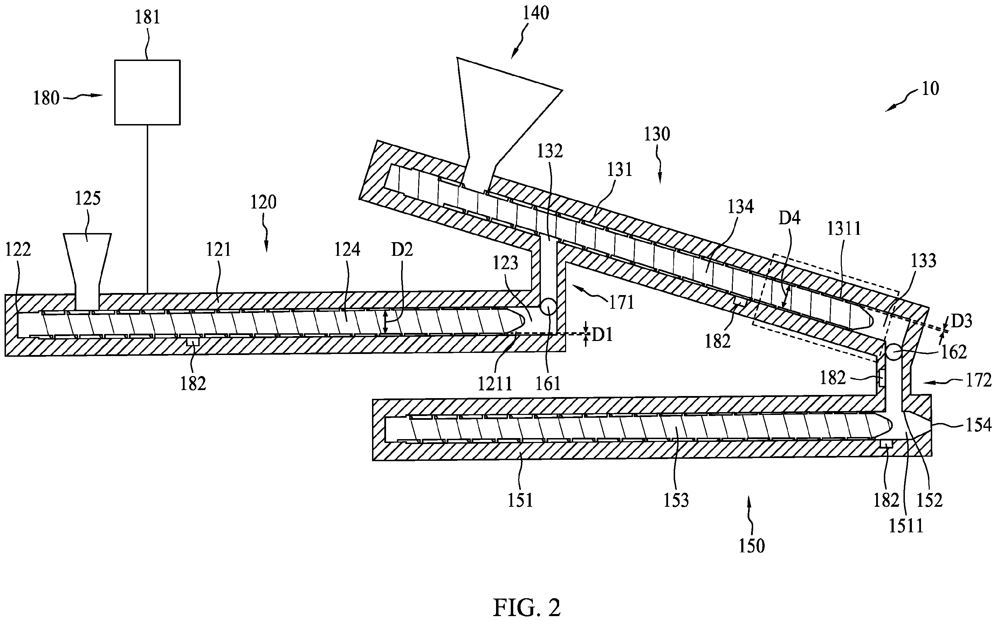

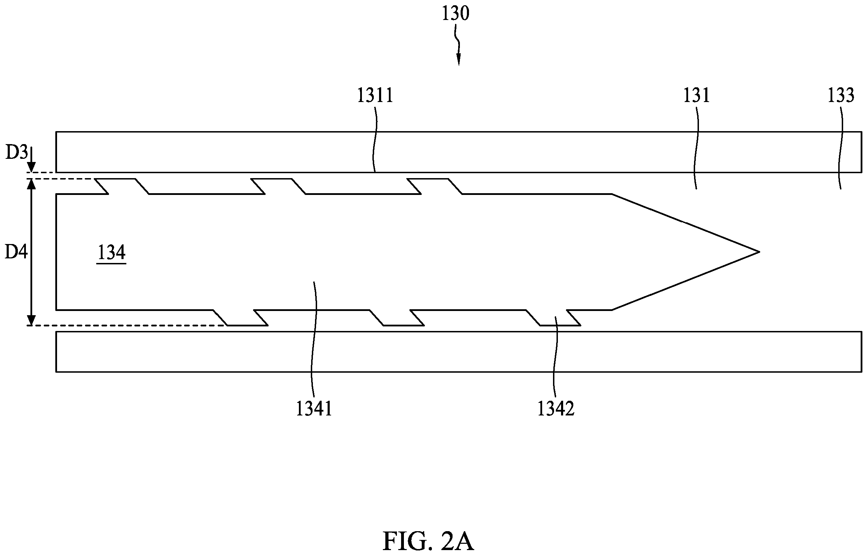

FIG. 2 is a schematic diagram view of the extruding system 110 according to aspects of the present disclosure in some embodiments. The extruding system 110 includes a melting unit 120, a mixing unit 130, a blowing agent supply unit 140, and an injection unit 150. In some embodiments, the extruding system 110 further includes a first flow control element 161, a second flow control element 162, and a monitoring module 180.

In some embodiments, referring to FIG. 2, the melting unit 120 is configured to convey the polymeric material. In some embodiments, the melting unit 120 includes a pressing cartridge 121, a first feeding passage 122, a first discharging passage 123, and a pushing member 124. In some embodiments, the melting unit 120 further includes a feeding hopper 125.

In some embodiments, the first feeding passage 122 and the first discharging passage 123 are respectively disposed at two ends of the pressing cartridge 121. In some embodiments, the first feeding passage 122 communicates with an inner space 1211 of the pressing cartridge 121, and the first discharging passage 123 communicates with an external space of the pressing cartridge 121, wherein the first feeding passage 122 is configured to deliver the polymeric material to the inner space 1211 of the pressing cartridge 121. In some embodiments, the feeding hopper 125 is configured to deliver a polymeric material to the inner space 1211 of the pressing cartridge 121 through the first feeding passage 122.

The pushing member 124 is configured to convey the polymeric material from the first feeding passage 122 to the first discharging passage 123. In some embodiments, the pushing member 124 is disposed in the inner space 1211 of the pressing cartridge 121. In some embodiments, the pushing member 124 is disposed in the inner space 1211 of the pressing cartridge 121 between the first feeding passage 122 and the first discharging passage 123, and is used to force the polymeric material toward the first discharging passage 123. In some embodiments, the pushing member 124 is rotatable relative to the pressing cartridge 121. In some embodiments, the polymeric material is conveyed from the first feeding passage 122 to the first discharging passage 123 by rotation of the pushing member 124. In some embodiments, the pushing member 124 is immovable in a direction parallel to the longitudinal axis of the pressing cartridge 121.

In some embodiments, a length of the pushing member 124 extends along a length of the pressing cartridge 121, and a ratio of a distance D1 between an inner sidewall 1212 of the pressing cartridge 121 and the pushing member 124 and a diameter D2 of the pushing member 124 is in a range of about 1:1500 to about 1:4500, and the polymeric material melted by the melting unit 120 may be uniformed. In some embodiments, a shortest distance D1 between an inner sidewall 1212 of the pressing cartridge 121 and the pushing member 124 is substantially equal to or less than 0.3 mm. In some embodiments, the shortest distance D1 between the inner sidewall 1212 of the pressing cartridge 121 and the pushing member 124 ranges between 0.01 and 0.05 mm.

The mixing unit 130 is configured to receive the polymeric material from the melting unit 120 and configured to mix the polymeric material with a blowing agent and to form the molding material of the polymeric material and the blowing agent. The mixing unit 130 includes a hollow mixing cartridge 131, a second feeding passage 132, a second discharging passage 133, and a mixing rotor 134.

The second feeding passage 132 and the second discharging passage 133 are respectively disposed at two ends of the mixing cartridge 131. In some embodiments, the second feeding passage 132 is configured to deliver the polymeric material. In some embodiments, the second discharging passage 133 is configured to discharge the molding material.

The mixing rotor 134 is configured to mix the polymeric material with the blowing agent to form a molding material in the mixing cartridge 131. In some embodiments, the mixing rotor 134 is disposed in the mixing cartridge 131. In some embodiments, the mixing rotor 134 is disposed in the mixing cartridge 131 between the second feeding passage 132 and the second discharging passage 133, so as to agitate the molding material in the mixing cartridge. The mixing rotor 134 is rotatable to mix the polymeric material with the blowing agent and to convey the molding material of the polymeric material and the blowing agent from the second feeding passage 132 to the second discharging passage 133. In some embodiments, the mixing rotor 134 is immovable in a direction parallel to the longitudinal axis of the mixing cartridge 131.

In some embodiments, a length of the mixing rotor 134 extends along a length of the hollow mixing cartridge 131, and a ratio of a shortest distance D3 between an inner sidewall 1311 of the hollow mixing cartridge 131 and the mixing rotor 134 and a diameter D4 of the mixing rotor 134 is in a range of about 1:1500 to about 1:4500, and the molding material prepared by the extruding system 110 may be even and uniformed. In some embodiments, the molding material may be divided in to a plurality of portions, and a ratio of the blowing agent to the polymeric material of each portion of the molding material prepared by the extruding system 110 is substantially constant. In some embodiments, a ratio of the polymeric material to the blowing agent in a first portion of the molding material is substantially equal to a ratio of the polymeric material to the blowing agent in a second portion of the molding material. In some embodiments, the shortest distance D3 between the inner sidewall 1311 of the hollow mixing cartridge 131 and the mixing rotor 134 is substantially equal to or less than 0.3 mm. In some embodiments, the shortest distance D3 between the inner sidewall 1311 of the hollow mixing cartridge 131 and the mixing rotor 134 ranges between 0.01 and 0.09 mm.

FIG. 2A is an enlarge view of a portion of the extruding system according to aspects of the present disclosure in some embodiments. To enable the melted polymeric material and the blowing agent to mix uniformly in the mixing cartridge 131, in some embodiments, referring to FIGS. 2 and 2A, the mixing rotor 134 further includes a column-like body 1341 in a cylindrical shape and rotatably disposed in the mixing cartridge 131, and a groove portion 1342 annularly arranged on the periphery of the column-like body 1341. Therefore, when the column-like body 1341 rotates, the polymeric material and the blowing agent are agitated by the groove portion 1342, so as to achieve a desired mixing effect. In some embodiments, the shortest distance D3 is a shortest distance between the groove portion 1342 and the inner sidewall 1311 of the hollow mixing cartridge 131. In some embodiments, when the shortest distance D3 is a shortest distance between the groove portion 1342 and the inner sidewall 1311 of the hollow mixing cartridge 131, the shortest distance D3 ranges between 0.01 and 0.09 mm. In some embodiments, the diameter D4 of the mixing rotor 134 ranges between the 45 to 75 mm.

In some embodiments, when the shortest distance D3 is substantially less than 0.01mm, the blowing agent in a predetermined amount of the molding material is substantially greater than 0.8 per cm³. In some embodiments, if the blowing agent in the predetermined amount of the molding material is substantially greater than 0.8 per cm³, a bubble density in the predetermined amount of the molding material after foaming is substantially greater than 180000 per cm³.

In some embodiments, when the ratio of the shortest distance D3 to the diameter D4 ranges between 1:1500 and 1:4500, an evenness of the blowing agent to the polymeric material is optimized. In other words, a mixing of the blowing agent and the polymeric material by the mixing rotor 134 is even and uniform. In some embodiments, when the ratio of the shortest distance D3 to the diameter D4 ranges between 1:1500 and 1 :4500, a ratio of the blowing agent to the polymeric material in a predetermined amount of the molding material ranges between 4:1 to 3:1. In some embodiments, the ratio of the blowing agent to the polymeric material in the predetermined amount of the molding material is about 1:1. In some embodiments, if the ratio of the blowing agent to the polymeric material in the predetermined amount of the molding material ranges between 4:1 and 3:1 ratio of bubbles to the polymeric material in the predetermined amount of the molding material after foaming also ranges between 4:1 and 3:1. In some embodiments, the ratio of the bubbles to the polymeric material in the predetermined amount of the molding material after foaming is about 4:1.

In some embodiments, the melting unit 120 includes a hollow pressing cartridge 121 configured to accommodate the polymeric material and having a first pressure, and the mixing unit 130 includes a hollow mixing cartridge 131 having a second pressure. In some embodiments, in order to prevent backflow, the first pressure is greater than the second pressure. In some embodiments, the polymeric material is drawn from the melting unit 120 toward the mixing unit 130 by the difference between the first pressure and the second pressure.

The blowing agent supply unit 140 is connected to the mixing unit 130 and configured to convey the blowing agent into the mixing unit 130. In some embodiments, the blowing agent supply unit 140 is positioned between the first flow control element 161 and the second flow control element 162. In some embodiments, the blowing agent supply unit 140 is disposed proximal to the first flow control element 161 and distal to the second flow control element 162.

In some embodiments, a blowing agent source (not shown) is connected to the blowing agent supply unit 140 and is configured to supply any type of blowing agent known to those of ordinary skill in the art. In some embodiments, the blowing agent is in the supercritical fluid state after being introduced into the mixing unit 130 by the blowing agent supply unit 140.

In some embodiments, the first flow control element 161 is disposed at a first port 171 that connects the melting unit 120 to the mixing unit 130. The first port 171 is configured to introduce the polymeric material from the melting unit 120 into the mixing unit 130. The first port 171 is located between the melting unit 120 and the mixing unit 130. In some embodiments, the first port 171 is configured to introduce the polymeric material from the pressing cartridge 121 of the melting unit 120 into the mixing cartridge 131 of the mixing unit 130. In some embodiments, the polymeric material can be conveyed and/or drawn from the melting unit 120 to the mixing unit 130 through the first port 171 by a pressure difference between the first pressure and the second pressure.

In some embodiments, the first flow control element 161 is disposed between the melting unit 120 and the mixing unit 130 and is configured to control flow of the polymeric material from the melting unit 120 to the mixing unit 130. The first flow control element 161 may be a valve, a movable cover or the like.

In some embodiments, the first flow control element 161 is configured to switch between an open configuration and a closed configuration. The open configuration of the first flow control element 161 allows the polymeric material to flow from the melting unit 120 into the mixing unit 130, and the closed configuration of the first flow control element 161 prevents the polymeric material from flowing from the mixing unit 130 back to the melting unit 120.

In some embodiments, the first flow control element 161 is configured to maintain a pressure difference between the melting unit 120 and the mixing unit 130. In some embodiments, the first flow control element 161 is configured to maintain a pressure difference between the melting unit 120 and the mixing unit 130 by switching between the open configuration and the closed configuration, so that the polymeric material is not able to flow from the mixing cartridge 131 of the mixing unit 130 back to the pressing cartridge 121 of the melting unit 120. In some embodiments, the first flow control element 161 is configured to adjust the first pressure and/or the second pressure in order to maintain the pressure difference between the first pressure and the second pressure. In some embodiments, the first flow control element 161 is in the closed configuration when the first pressure is similar to the second pressure.

In some embodiments, the injection unit 150 is configured to receive the molding material discharged from the second discharging passage 133 of the mixing unit 130 and to discharge the molding material out of the injection unit 150. In some embodiments, the injection unit 150 is configured to inject the molding material, and the discharging channel 111 is communicable with the injection unit 150.

In some embodiments, the injection unit 150 includes a hollow metering cartridge 151 configured to accommodate the molding material. The metering cartridge 151 has a hollow inner space 1511, wherein the inner space 1511 is in communication with the second discharging passage 133 and configured to accommodate the molding material. The injection unit 150 further includes a connecting passage 152 in communication with the inner space 1511 of the metering cartridge 151 and a discharging member 153 slidably disposed in the inner space 1511 of the metering cartridge 151 and configured to discharge the molding material out of the metering cartridge 151 through an outlet 154.

Referring back to FIG. 1, in some embodiments, the injection unit 150 is configured to discharge the molding material into the molding device 100 through a discharging channel 111 corresponds to one extruding system 110. In some embodiments, the discharging channel 111 in communication with the injection unit 150 is engageable with the molding device 100 and configured to discharge the molding material into a mold cavity 103 of the molding device 100. The molding material is flowed from the extruding system 110 into the discharging channel 111.

In some embodiments, the discharging channel 111 has an outlet 111o away from the injection unit 150. The discharging channel 111 may be moved, extended, or retracted from the molding device 100. In some embodiments, the outlets 111ο of the discharging channels 111 may be extended into and be retracted from the molding device 111. The molding device 100 includes the mold cavity 103 and a feeding port 104 communicable with the mold cavity 103 and correspondingly engageable with the outlet 111o.

In some embodiments, the molding device 100 includes a first mold 101 and a second mold 102. The first mold 101 is engageable with the second mold 102. The molding device 100 is in a closed configuration when the first mold 101 is engaged with the second mold 102. In some embodiments, the first mold 101 is a lower mold, the second mold 102 is an upper mold, and the first mold 101 is under the second mold 102. In some embodiments, the mold cavity 103 of the molding device 100 defined by the first mold 101 and the second mold 102 when the first mold 101 is engaged with the second mold 102. The mold cavity 103 is configured to hold the molding material or the foamed member formed from the molding material.

In some embodiments, the feeding port 104 is engageable with the outlet 111o. The feeding port 104 is disposed at the first mold 101 or the second mold 102. In some embodiments, as shown in FIG. 1, the feeding port 104 is disposed at a side of the molding device 100. In some embodiments, the feeding port 104 is disposed at a first sidewall 101s of the first mold 101 or a second sidewall 102s of the second mold 102. The feeding port 104 is configured to receive the molding material from the discharging channel 111 of the injection unit 150 when the discharging channel 111 is engaged with the molding device 100. The molding material can flow into the mold cavity 103 through the feeding port 104. In some embodiments, the feeding port 104 allows the molding material flowing through in a predetermined flow rate.

In some embodiments, the injection molding system 200 includes a supporting device 114 configured to secure the discharging channel 111 to the molding device 100. In some embodiments, the supporting device 114 includes a first element 1141 and a second element 1142. In some embodiments, the first element 1141 protrudes from the extruding system 110, and the second element 1142 is disposed on the molding device 100.

The molding device 100 further includes one or more pressure-regulating systems 106. In some embodiments, the molding device 100 may include different numbers of the pressure-regulating systems 106 or no pressure-regulating system 106. In some embodiments, a junction point 107 is in connection with the mold cavity 103. In some embodiments, the interior sidewall 105a or the inner bottom wall 105b of the mold cavity 103 includes the junction point 107. In some embodiments, the junction point 107 is configured to allow a fluid or gas to enter into or exit from the mold cavity 103.

The pressure-regulating system 106 may include a first gas conduit 1061, a second gas conduit 1062, a gas source 1063, a first valve 1064, a second valve 1065, and a pressure-sensing unit 1066. In some embodiments, one end of the first gas conduit 1061 is coupled to the interior sidewall 105a or the inner bottom wall 105b of the molding device 100. In some embodiments, one end of the first gas conduit 1061 is coupled to the junction point 107, and the other end of the first gas conduit 1061 is coupled to the gas source 1063. In some embodiments, the gas source 1063 is configured to supply a fluid or gas, in which a suitable fluid or gas may be supplied depending on the needs; for example, the fluid or gas may be air, inert gas, etc., but the present invention is not limited thereto.

The location, shape and number of the junction point 107 are not particularly limited, and may be adjusted depending on the needs. In some embodiments, the junction point 107 is a hole. In some embodiments, the junction point 107 is disposed at the interior sidewall 105a or the inner bottom wall 105b of the molding device 100 and penetrates the first mold 101. In some embodiments, the junction point 107 is configured to supply gas and discharge gas, wherein when the first valve 1064 is open and the second valve 1065 is closed, the fluid or gas is supplied to the mold cavity 103; when the first valve 1064 is closed and the second valve 1065 is open, at least a portion of the fluid or gas in the mold cavity 103 is discharged.

In some embodiments, the feeding port 104 is disposed at the interior sidewall 105a of the molding device 100. In some embodiments, the feeding port 104 and the junction point 107 are disposed oppositely with respect to the mold cavity 103; as an example but not limitation, the feeding port 104 is disposed at one side of the interior sidewall 105a, and the junction point 107 is disposed at an opposite of the interior sidewall 105a. In some embodiments, the feeding port 104 is away from the junction point 107.

The first valve 1064 is disposed at the first gas conduit 1061 and is configured to control whether the gas from the gas source 1063 enters the mold cavity 103 through the first gas conduit 1061 and the junction point 107. The second gas conduit 1062 coupled to the mold and in communication with the mold cavity 103. In some embodiments, the second gas conduit 1062 is coupled to the junction point 107. The second valve 1065 is disposed at the second gas conduit 1062 and is configured to control whether the gas from the mold cavity 103 is discharged via the junction point 107 through the second gas conduit 1062.

In some embodiments, the second gas conduit 1062 is coupled to the first gas conduit 1061 and the junction point 107. In some embodiments, one end of the second gas conduit 1062 is in communication with a space with a pressure lower than the pressure in the mold cavity 103; for example, an external environment or a negative pressure space; however, the present invention is not limited thereto. The location at which the second gas conduit 1062 connects with the first gas conduit 1061 is not particularly limited; for example, the two may be connected at one end adjacent to an end where the first gas conduit 1061 connects to the junction point 107. In some embodiments, the first valve 1064 and the second valve 1065 are not simultaneously open.

The pressure-sensing unit 1066 is configured to sense the pressure in the mold cavity 103. In some embodiments, the properties of foamed polymers are affected by the pore size and distribution across the polymer, whereas the pore size and distribution are related to the temperature, pressure, and feeding rate. The pressure-sensing unit 1066 is not limited to any particular type, as long as it can sense the pressure and provide pressure information after sensing the pressure in the mold cavity 103. The pressure-regulating system 106 changes the condition at which the gas exits from/enters into the mold cavity 103 in accordance with the pressure information, so as to adjust the pressure in the mold cavity 103, in such a manner that the foamed polymeric article thus obtained has the desired predetermined shape and property.

In some embodiments, the pressure-sensing unit 1066 is disposed in the mold cavity 103, the first gas conduit 1061 or the second gas conduit 1062. In some embodiments, the pressure-sensing unit 1066 is disposed in the mold cavity 103 and is away from the feeding port 104. In some embodiments, the pressure-regulating system 106 has a plurality of pressure-sensing units 1066. The number and location of the plurality of pressure-sensing units 1066 are not particularly limited, for example, they can be arranged at the inner sidewall of the mold cavity 103 and spaced from each other, and/or anywhere in the first gas conduit 1061, and/or anywhere in the second gas conduit 1062; however, the present invention is not limited thereto.

In some embodiments, the injection molding system 200 further includes a control system 109. The control system 109 is configured to control the extruding system 110, the discharging channel 111, and the molding device 100. In some embodiments, the control system 109 automatically controls the extruding system 110, the discharging channel 111, and the molding device 100 in real time. In some embodiments, the control system 109 controls the pressure-regulating system 106 in real time.

In some embodiments, the control system 109 includes a central processor 1091 and a plurality of sensors 1092 electrically connected to or communicable with the central processor 1091. In some embodiments, the sensors 1092 are placed throughout the injection molding system 200 and configured to sense at least one processing condition (e.g., flow rate or viscosity of the molding material through the discharging channels 20, an amount of the molding material discharged from the discharging channel 111, a pressure inside the mold cavity 103, etc.) at a predetermined position of the injection molding system 200 (e.g., the sequence of extruding to the molding device 100, the alignment of the discharging channel 111 to the molding device 100, the outlet 111o, the feeding port 104, and the mold cavity 103, etc.). In some embodiments, the sensor 1092 is configured to detect the processing condition and transmit a signal or data based on the processing condition detected to the central processor 1091 for further analysis.

In some embodiments, the control system 109 controls which molding device 100 the discharging channel 111 are docked to. In some embodiments, the cables 1093 are electrically connected between the control system 109 and the extruding system 110, the discharging channel 111, and the molding device 100. The cables 1093 are configured to transmit the signal from the molding device 100 to the extruding system 110 and the discharging channel 111.

In some embodiments, the control system 109 is configured to process the pressure information detected by the pressure-sensing unit 1066, and configured to adjust the mixing condition of the extruding system 110 and the extruding amount and timing of the discharging channel 111. In some embodiments, the pressure-sensing unit 1066 provides the pressure information to the control system 109, and the control system 109 adjusts the first valve 1064 and the second valve 1065 in accordance with the pressure information. In some embodiments, the control system 109 adjusts the condition at which the gas enters into/exits from the mold cavity 103 in real time in accordance with the pressure information, and adjust the timing and amount of the molding material injected from the discharging channel 111 into the mold cavity 103, so that during the injection molding process, the amount and rate of injection is within a suitable or predetermined range, and the pressure in the mold cavity 103 is within a suitable or predetermined pressure range at all times. In some embodiments, the control system 109 further controls the feeding condition of the feeding port 104 and the gas supply condition of the gas source 1063. In some embodiments, the control system 109 and the first valve 1064, the second valve 1065, the pressure-sensing unit 1066 and the feeding port 104 are electrically connected.

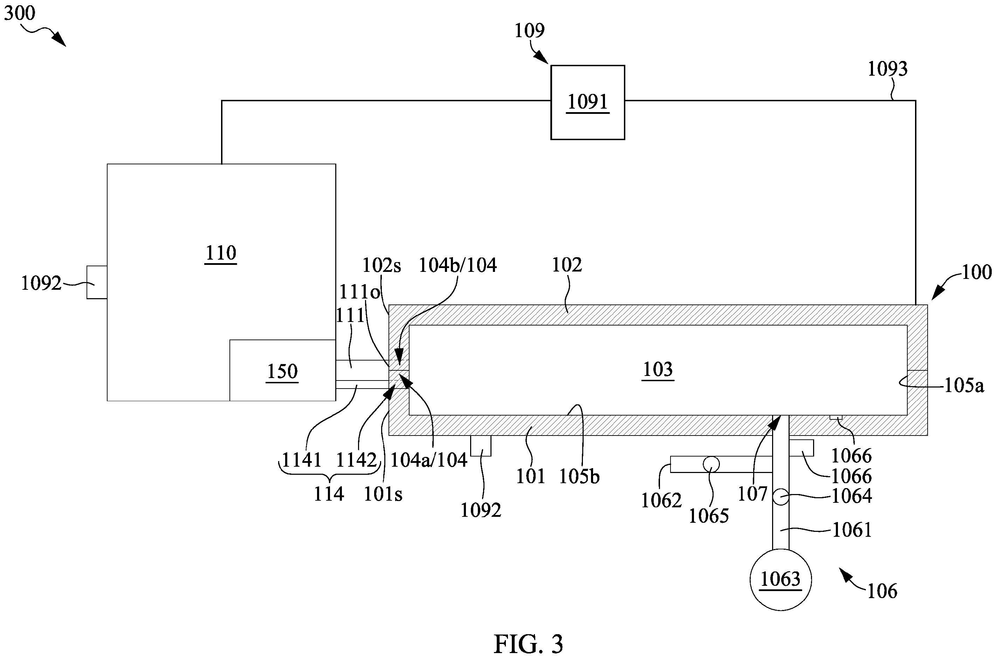

FIG. 3 is a schematic diagram view of an injection molding system 300 according to one embodiment of the present invention. The injection molding system 300 includes an extruding system 110 having an injection unit 150 and a molding device 100 as shown in FIG. 3. In some embodiments, a feeding port 104 is disposed between the first mold 101 and the second mold 102. In some embodiments, the feeding port 104 includes a first partial port 104a at the first mold 101 and a second partial port 104b at the second mold 102, and the first partial port 104a is aligned with the second partial port 104b when the molding device 100 is in a closed configuration. In some embodiments, the first partial port 104a is configured as a recess at a first sidewall 101s of the first mold 101, and the second partial port 104b is configured as a recess at a second sidewall 102s of the second mold 102.

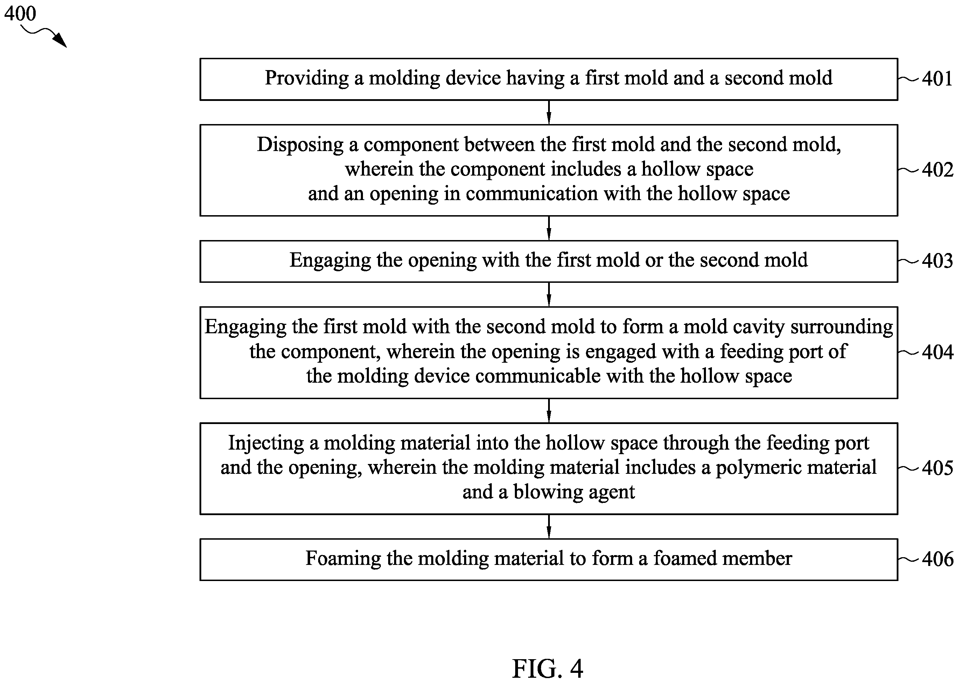

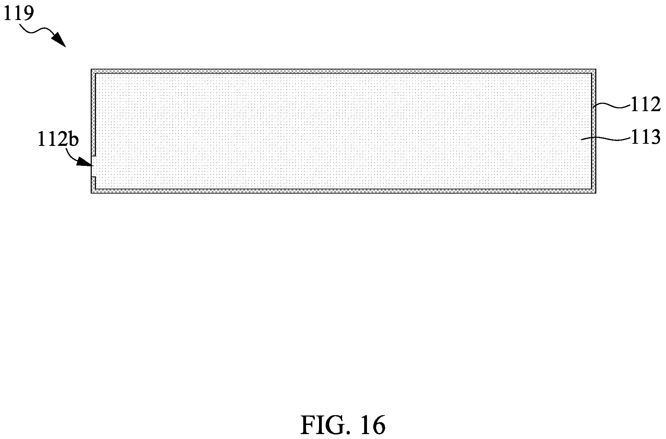

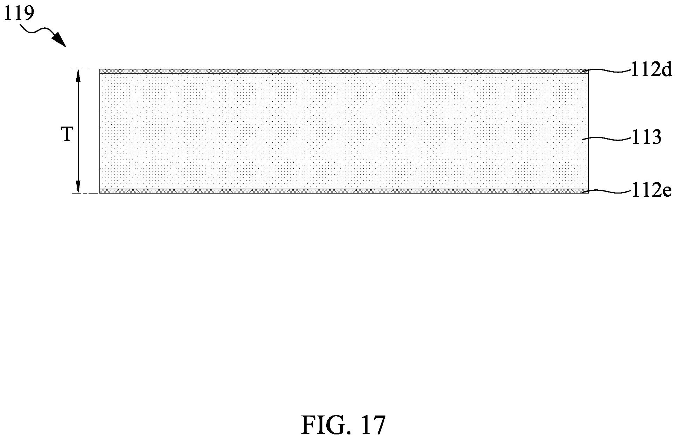

In the present disclosure, a method of manufacturing an article is disclosed. In some embodiments, an injection molding is performed by the method. The method includes a number of operations and the description and illustrations are not deemed as a limitation of the sequence of the operations. FIG. 4 is a flowchart illustrating a method of injection molding according to one embodiment of the present invention. In some embodiments, as shown in FIG. 4, a method of manufacturing an article 119 shown in FIG. 16 and 17 includes the following steps.

Step 401 includes providing a molding device having a first mold and a second mold. Step 402 includes disposing a component between the first mold and the second mold, wherein the component includes a hollow space and an opening in communication with the hollow space. Step 403 includes engaging the opening with the first mold or the second mold. Step 404 includes engaging the first mold with the second mold to form a mold cavity surrounding the component, wherein the opening is engaged with a feeding port of the molding device communicable with the hollow space.

Step 405 includes injecting a molding material into the hollow space through the feeding port and the opening, wherein the molding material includes a polymeric material and a blowing agent. Step 406 includes foaming the molding material to form a foamed member. In some embodiments, the feeding port is disposed at a sidewall of the molding device. In some embodiments, the foamed member is in contact with an inner surface 112c of the component. In some embodiments, the hollow space is expanded within the mold cavity during the formation of the foamed member.

The method 400 is not limited to the above-mentioned embodiments. In some embodiments, the method of manufacturing an article 119 shown in FIGS. 16 and 17 uses any of the above-mentioned injection molding systems 200 and 300 as shown in FIG. 1 to FIG. 3.

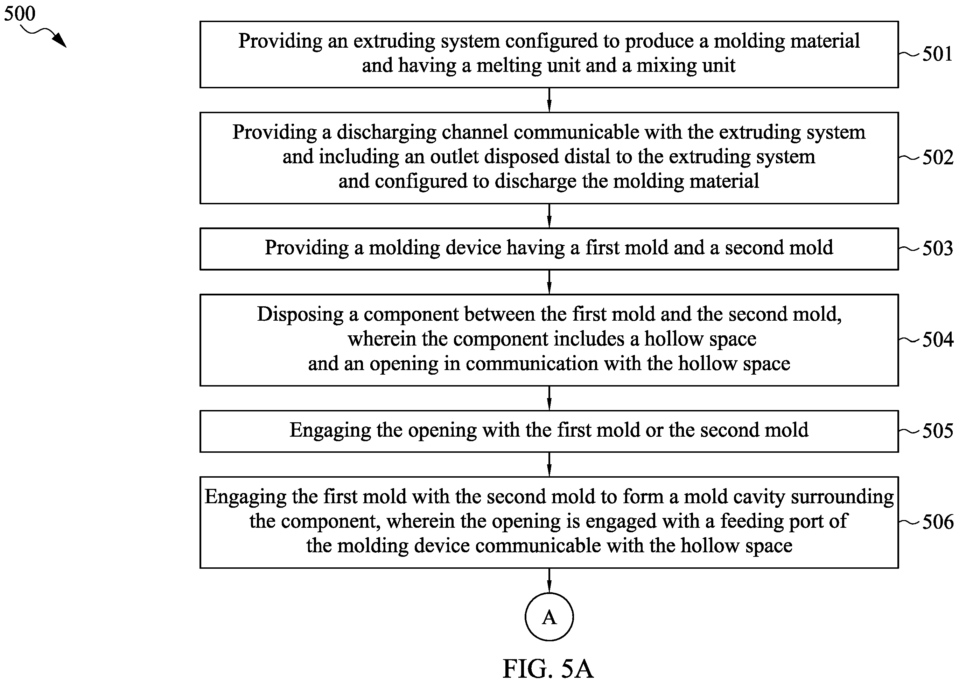

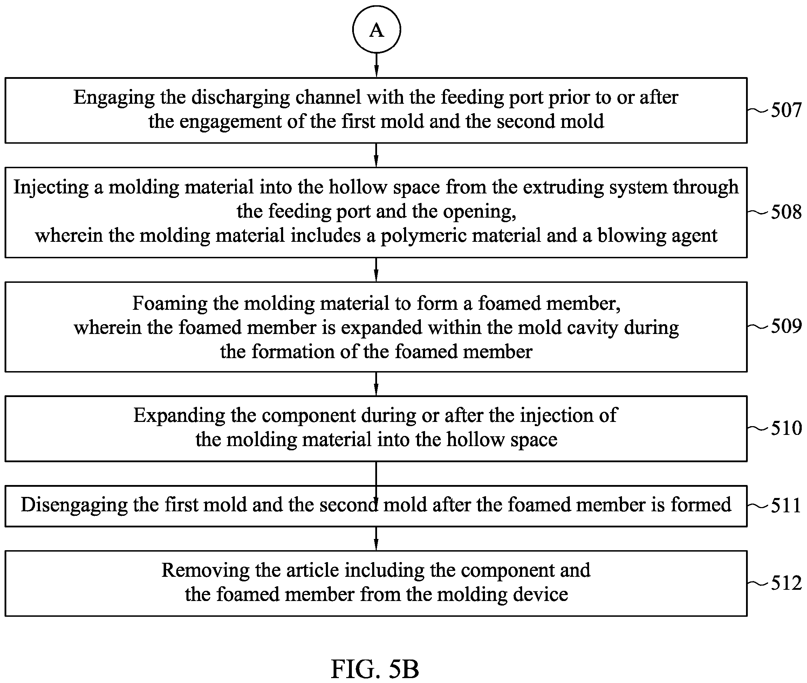

FIGS. 5A and 5B are flowcharts illustrating a method of injection molding according to one embodiment of the present invention. In some embodiments, as shown in FIGS. 5A and 5B, a method of manufacturing an article 500 includes the following steps.

In accordance with some embodiments of the present disclosure, a method of manufacturing an article is disclosed. In some embodiments, the above-mentioned injection molding systems 200 and 300 as shown in FIG. 1 to FIG. 3 are used by the method 500. FIGS. 5A and 5B is a flowchart of the method 500 in accordance with some embodiments. The method 500 includes a number of operations (501 to 512), and descriptions and illustrations are not deemed as a limitation to a sequence of the operations. Additional steps can be provided before, during, and after the operations shown in FIGS. 5A and 5B, and some of the operations described below can be replaced or eliminated in other embodiments of the method 500. An order of the operations may be interchangeable.

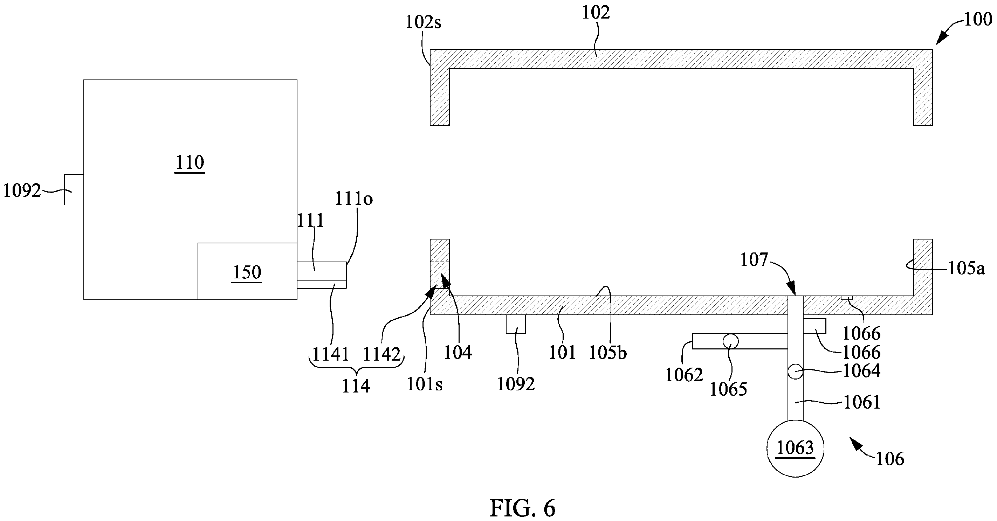

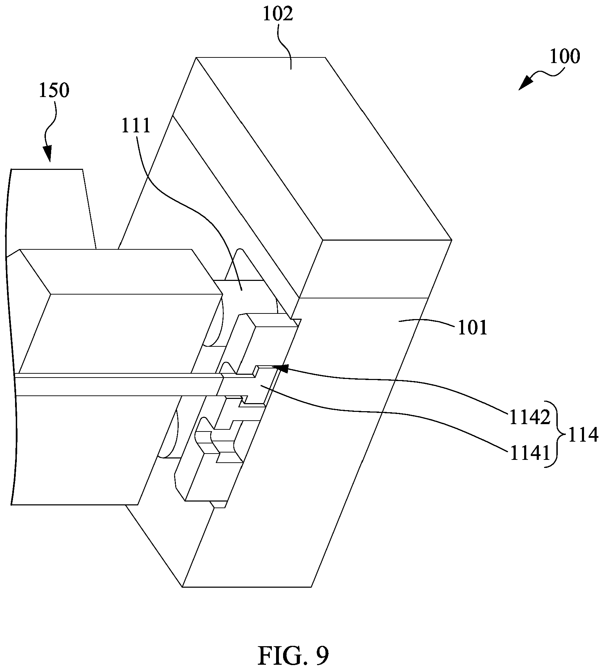

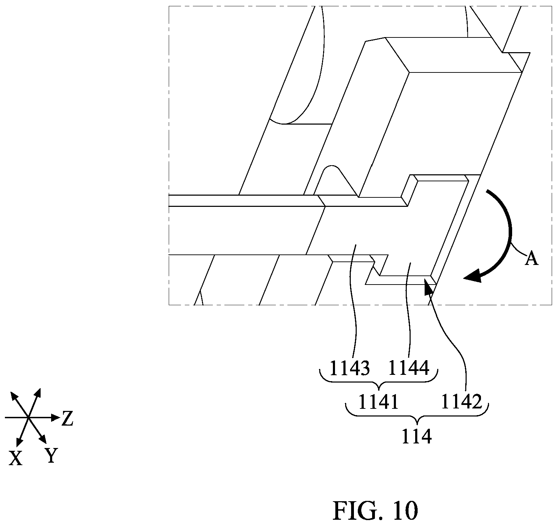

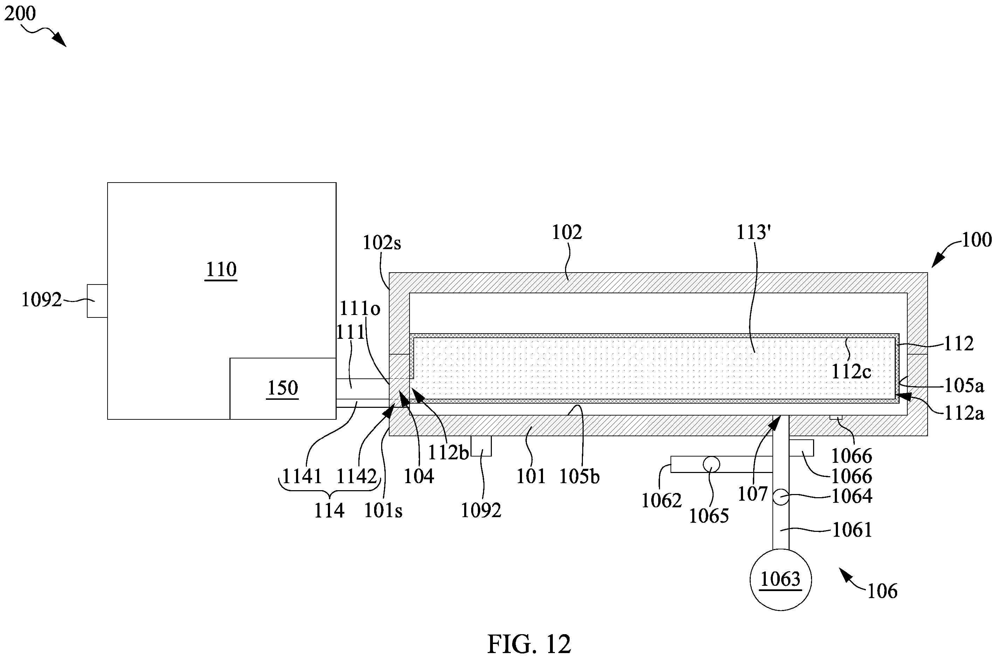

FIGS. 6 to 8 and 11 to 15 are schematic cross-sectional views of one or more operations of the method 500 for manufacturing an article in accordance with some embodiments of the present disclosure. FIGS. 9 and 10 are schematic diagrams of a portion of the injection molding system according to one embodiment of the present disclosure. FIGS. 16 and 17 are schematic cross-sectional views illustrating an article 119 manufactured by the method 500 in accordance with some embodiments of the present disclosure. The method 500 begins with operation 501. Operation 501 includes providing an extruding system 110 configured to produce a molding material 113' shown in FIG. 12 and having a melting unit 120 and a mixing unit 130 shown in FIG. 2. The method 500 continues with operation 502. Operation 502 includes providing a discharging channel 111 communicable with the extruding system 110 and including an outlet 111ο disposed distal to the extruding system 110 and configured to discharge the molding material 113'.

The method 500 continues with operation 503. Operation 503 includes providing a molding device 100 having a first mold 101 and a second mold 102. In some embodiments, operation 503 of the method 500 are similar to operation 401 of the method 400.

In some embodiments, referring to FIG. 6, the molding device 100 includes the second mold 102 and the first mold 101 opposite to the second mold 102. In some embodiments, the second mold 102 is an upper mold and the first mold 101 is a lower mold. In some embodiments, the second mold 102 and the first mold 101 are separated from each other. In some embodiments, the second mold 102 and the first mold 101 may be complementarily positioned in alignment with each other and separable from each other. In some embodiments, the first mold 101 or the second mold 102 includes a feeding port 104. In some embodiments, the feeding port 104 is disposed at a first sidewall 101s of the first mold 101 or a second sidewall 102s of the second mold 102.

The method 500 continues with operation 504 and operation 505. Operation 504 includes disposing a component 112 between the first mold 101 and the second mold 102, wherein the component 112 includes a hollow space 112a and an opening 112b in communication with the hollow space 112a. Operation 505 includes engaging the opening 112b with the first mold 101 or the second mold 102. In some embodiments, operation 504 and operation 505 of the method 500 are similar to operation 402 and operation 403 of the method 400.

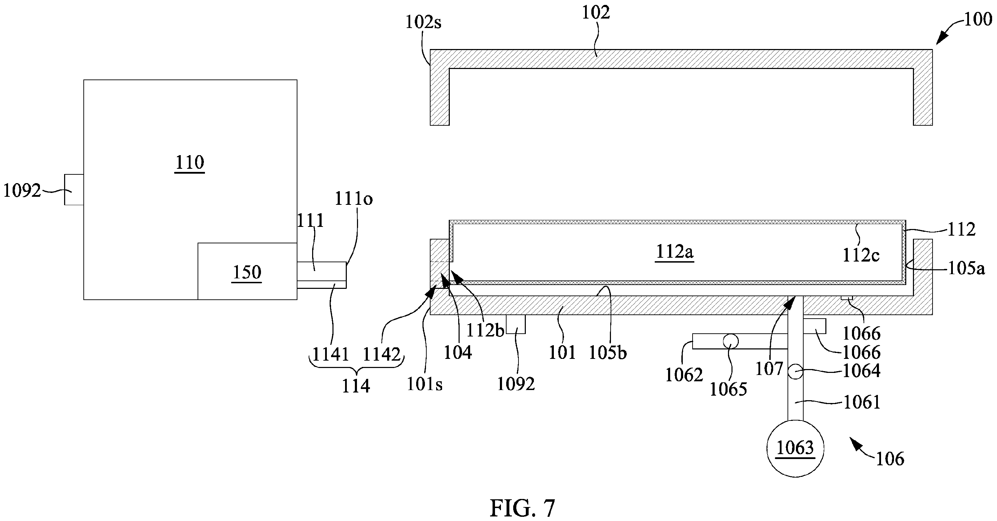

Referring to FIG. 7, the component 112 is placed at the first mold 101 or the second mold 102. In some embodiments, the component 112 is disposed within a first partial mold cavity 103a of the first mold 101, and is at least partially in contact with the first mold 101. In some embodiments, the component 112 is in contact with one or more of interior sidewall 105a of the first mold 101. In some embodiments, the second mold 102 has a second partial mold cavity 103b corresponding to the first partial mold cavity 103a.

In some embodiments, the component 112 is flexible, resilient or elastic. In some embodiments, the component 112 is a cloth, fabric, textile or the like. In some embodiments, the component 112 is air permeable.

The method 500 continues with operation 506. Operation 506 includes engaging the first mold 101 with the second mold 102 to form a mold cavity 103 surrounding the component 112, wherein the opening 112b is engaged with the feeding port 104 of the molding device 100 communicable with the hollow space 112a. In some embodiments, operation 506 of the method 500 are similar to operation 404 of the method 400. In some embodiments, the feeding port 104 is disposed at the interior sidewall 105a of the molding device 100.

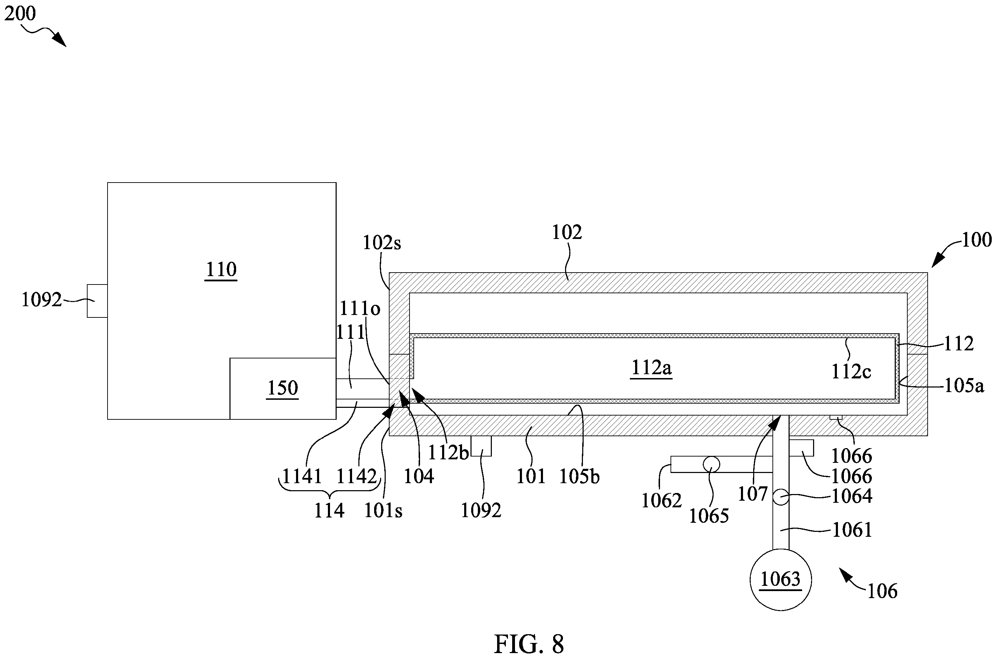

In some embodiments, referring to FIG. 8, a mold cavity 103 is defined when the second mold 102 and the first mold 101 are complementarily positioned in alignment with each other. The mold cavity 103 may be defined by the first mold cavity 103a of the first mold 101 and the second mold cavity 103b of the second mold 102. In some embodiments, the interior sidewall 105a of the molding device 100 is curved. In some embodiments, the interior sidewall 105a of the molding device 100 is concave surface, a convex surface or a curved surface including a combination of concave and convex surfaces. In some embodiments, the opening 112b and a portion of the component 112 adjacent to the opening 112b are disposed within the feeding port 104 when the opening 112b is engaged with the feeding port 104, that the portion of the component 112 is inserted into the feeding port 104. The component 112 is placed at the first mold 101 and/or the second mold 102 when the opening 112b is engaged with the feeding port 104. As a result, the feeding port 104 is communicable with the hollow space 112a when the opening 112b is engaged with the feeding port 104.

After placing the component 112 at the first mold 101 or the second mold 102, the first mold 101 is engaged with the second mold 102 as shown in FIG. 8. The molding device 100 is in a closed configuration when the first mold 101 is engaged with the second mold 102. The first partial mold cavity 103a and the second partial mold cavity 103b are combined to become the mold cavity 103 when the first mold 101 is engaged with the second mold 102. The component 112 is enclosed by the molding device 100 and within the mold cavity 103.

The method 500 continues with operation 507. Operation 507 includes engaging the discharging channel 111 with the feeding port 104 prior to or after the engagement of the first mold 101 and the second mold 102.

Referring back to FIGS. 7, the extruding system 110 and the discharging channel 111 are away from the molding device 100. In some embodiments, before the engagement of the outlet 111ο with the feeding port 104 of the molding device 100, the discharging channel 111 is moved to a first position adjacent to the molding device 100. In some embodiments, the discharging channel 111 is moved to the first position adjacent to the molding device 100. At the first position, the discharging channel 111 are aligned with the feeding port 104 of the molding device 100. In some embodiments, a distance between the outlet 111o and the feeding port 104 is greater than 0. In some embodiments, at the first position, the discharging channel 111 is aligned with the feeding port 104.

In some embodiments, referring to FIG. 8, after the alignment of the discharging channel 111 with the feeding port 104, the discharging channel 111 is moved toward the molding device 100 to be received by the feeding port 104, and then the outlet 111ο is docked to the feeding port 104. In some embodiments, the discharging channel 111 is moved toward the molding device 100 to be received by the feeding port 104. In some embodiments, the discharging channel 111 is moved toward the molding device 100 to be received by the feeding port 104.

In some embodiments, prior to or after the engagement of the first mold 101 and the second mold 102, the discharging channel 111 is engaged with the feeding port 104. After the outlet 111o is docked to the feeding port 104, the outlet 111o and the feeding port 104 form a flow path of the molding material 113', such that the discharging channel 111 is communicable with the hollow space 112a through the feeding port 104 and the opening 112b. In some embodiments, the discharging channel 111 is partially protruded into the feeding port 104 when the discharging channel 111 is engaged with the feeding port 104. In some embodiments, the opening 112b and a portion of the component 112 adjacent to the opening 112b are disposed within the feeding port 104 when the opening 112b is engaged with the feeding port 104.

The outlet 111ο must be tightly engaged with the feeding port 104 in order to prevent the molding material 113' from leaking out of the molding device 100. In some embodiments, the method 500 includes securing the discharging channel 111 to the molding device 100. In some embodiments, a force is provided by a supporting device 114 to prevent the separation of the extruding system 110 from the molding device 100.

In some embodiments, when the extruding system 110 injects molding material 113' into the molding device 100, the molding device 100 may generate a reaction force opposite to an injection direction, and the reaction force may be transmitted to the discharging channel 111 and the extruding system 110, so that the discharging channel 111 tend to separate from the molding device 100. In some embodiments, the supporting device 114 provides support against the reaction force opposite to the injection direction.

In some embodiments, the discharging channel 111 is secured to the molding device 100 by engaging a first element 1141 of the supporting device 114 relative to a second element 1142 of the supporting device 114 to secure the discharging channel 111 with the molding device 100, wherein the first element 1141 protrudes from the extruding system 110, and the second element 1142 is disposed on the molding device 100. In some embodiments, a force is provided by the supporting device 114 after the engagement to prevent the discharging channel 111 separating from the molding device 100.

FIG. 9 is a schematic diagram of a portion of the injection molding system 200 according to one embodiment of the present disclosure. In some embodiments, referring to FIG. 9, the supporting device 114 includes first and second elements 1141, 1142 configured to engage with each other, wherein the first element 1141 protrudes from the extruding system 110 or the discharging channel 111, and the second element 1142 is disposed on the molding device 100, but the disclosure is not limited thereto. In some embodiments, the first and second elements 1141, 1142 can be clamped to each other; for example, the second element 1142 is configured to receive the first element 1141.

In some embodiments, the supporting device 114 is disposed adjacent to the mold cavity 103 of the molding device 100. In some embodiments, the first element 1141 is disposed on the discharging channel 111, and the second element 1142 is disposed on the molding device 100. In some embodiments, the first element 1141 is a part of the extruding system 110 or the discharging channel 111, while the second element 1142 is a part of the molding device 100. In some embodiments, the first element 1141 is a part of the extruding system 110 and disposed adjacent to the discharging channel 111. In some embodiments, the first element 1141 and the second element 1142 can engage with each other, thereby tightly engaging the discharging channel 111 with the molding device 100.

In some embodiments, in order to prevent separation of the extruding system 110 and the molding device 100 during the injection, the engaged first element 1141 is subjected to a force to against the second element 1142. The force may be equal to or greater than a threshold. The threshold may be adjusted according to the pressure in the mold cavity 103 and the hollow space 112a and the diameter of the outlet 111o, or according to other factors.

The position and number of the first element 1141 may be adjusted according to requirements, and are not particularly limited. The position and number of the second element 1142 may also be adjusted according to requirements, and are not particularly limited. In some embodiments, the position and number of the second element 1142 correspond to the position and number of the first element 1141. In an embodiment, the first element 1141 can be disposed at any suitable position on or adjacent to the discharging channel 111, and the second element 1142 can be disposed at any suitable position on the molding device 100.

FIG. 10 is a schematic diagram of a portion of the injection molding system 200 according to one embodiment of the present invention. In some embodiments, referring to FIG. 10, the supporting device 114 can be in either of two states, a locked state and an unlocked state. In the unlocked state, the first element 1141 enters the corresponding second element 1142 but has not yet been locked with the second element 1142. In other words, the first element 1141 can still be withdrawn from the second element 1142 when the supporting device 114 is in the unlocked state. In the locked state, the first element 1141 enters and locks with the corresponding second element 1142, such that the first element 1141 cannot be withdrawn from the second element 1142. FIG. 10 illustrates the supporting device 114 in the locked state. The supporting device 114 can be operated and controlled manually or automatically. The supporting device 114 can be switched between two states manually or automatically.

In some embodiments, the first element 1141 is rotatably fixed to the extruding system 110. In some embodiments, the first element 1141 includes an elongated portion 1143 and an arm portion 1144. The elongated portion 1143 and the arm portion 1144 are rotatable in a direction indicated by an arrow A. The elongated portion 1143 is fixed to the extruding system 110 and extends in a first direction Z toward the second mold 102. The arm portion 1144 is coupled to the elongated portion 1143 and extends in a second direction X substantially orthogonal to the first direction Z or in a third direction Y substantially orthogonal to the first direction Z. In some embodiments, the first element 1141 has an inverted T shape. After the first element 1141 enters the second element 1142, the supporting device 114 is changed from the unlocked state to the locked state by rotation of the arm portion 1144 of the first element 1141. In some embodiments, the first element 1141 is locked with the second element 1142 by rotating the arm portion 1144 of the first element 1141 with about 90 degrees. FIG. 10 illustrates the arm portion 1144 is locked with the second element 1142 after rotating the arm portion 1144 with about 90 degrees. As a result, the supporting device 114 is in the locked state, and the discharging channel 111 is tightly engaged with the molding device 100, and thus the injection of the molding material 113' from the extruding system 110 and the discharging channel 111 to the molding device 100 can begin.

In some embodiments, referring to FIGS. 8 to 10, the discharging channel 111 is secured to the molding device 100 by turning the supporting device 114 into the lock state, such as rotating a first element 1141 of the supporting device 114 relative to and within a second element 1142 of the supporting device 114 while engaging the outlet 111ο with the feeding port 114. In some embodiments, when the outlet 111ο are docked to the feeding port 114, the first element 1141 enters the second element 1142 and then locked with the second element 1142. In some embodiments, the discharging channel 111 is secured to the molding device 100 by rotating an elongated portion 1143 and an arm portion 1144 of the first element 1141 of the supporting device 114, the elongated portion 1143 is fixed to the extruding system 110 and extends in a first direction Z toward the molding device 100, and the arm portion 1144 is coupled to the elongated portion 1143 and extends in a second direction X different from the first direction Z.

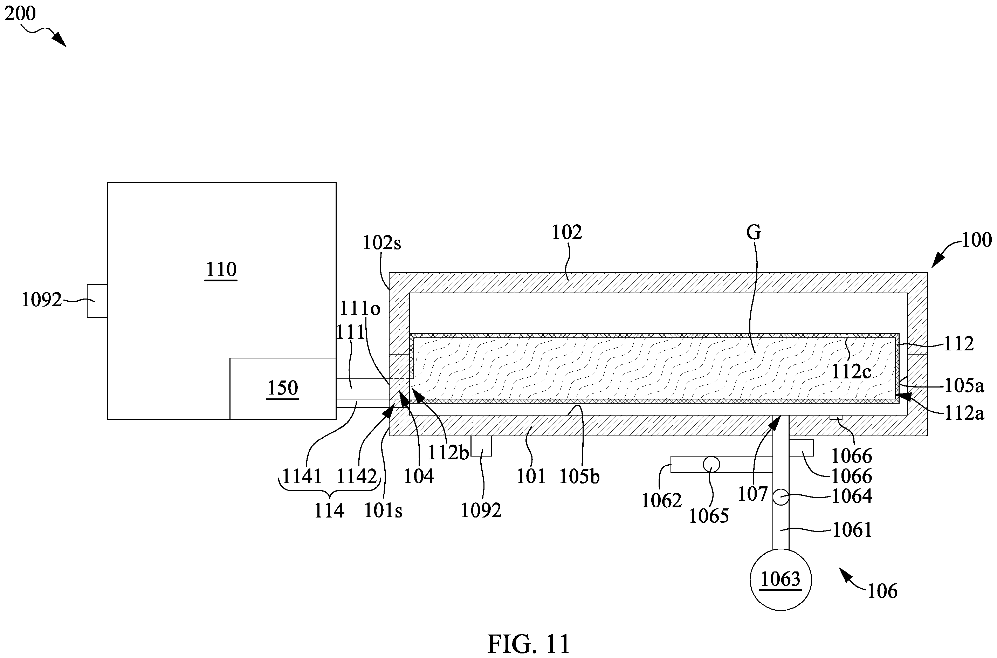

In some embodiments, referring to FIG. 11, the method 500 further includes injecting a gas G into the mold cavity 103 and/or the hollow space 112a after the engagement of the first mold 101 and the second mold 102, so as to increase a pressure inside the mold cavity 103 and/or the hollow space 112a. In some embodiments, the gas is injected through a pressure-regulating system 106 in connection with the mold cavity 103 until the mold cavity 103 is sensed to have a first predetermined pressure before injecting the molding material 103' into the mold cavity 103. In some embodiments, the gas G injected into the mold cavity 103 through a first gas conduit 1061. In some embodiments, the gas G is any suitable gas depending on the need; for example, air; however, the present invention is not limited thereto. In some embodiments, after the engagement of the outlet 111ο and the feeding port 114, the pressure in the mold cavity 103 of the molding device 100 is adjusted to the first predetermined pressure. After the molding device 100 has the first predetermined pressure, the injection begins. In some embodiments, the gas G is air or the like.

In some embodiments, the pressure sensing unit 1066 senses that the pressure in the mold cavity 103 is the atmospheric pressure. In some embodiments, a first valve 1064 is opened so that the gas G is injected into the mold cavity 103 through the first gas conduit 1061. In some embodiments, the gas G is injected into the mold cavity 103 through the pressure-regulating system 106 when the feeding port 114 is closed. In some embodiments, the gas G is injected into the mold cavity 103 through the feeding port 104.

In some embodiments, during the process of injecting the gas G into the mold cavity 103, the pressure in the mold cavity 103 is sensed continuously. In some embodiments, the pressure sensing unit 1066 continuously senses the pressure in the mold cavity 103, and the gas G is injected into the mold cavity 103 until it is senses that the mold cavity 103 has the first predetermined pressure; then, the first valve 1064 and the second valve 1065 of the pressure-regulating system 106 are closed, and the gas G injection into the mold cavity 103 is stopped. In some embodiments, the first predetermined pressure is greater than the atmospheric pressure. In some embodiments, the first predetermined pressure is less than the atmospheric pressure.

In some embodiments, the mold cavity 103 has the first predetermined pressure before operation 508, and the first valve 1064 and the second valve 1065 of the pressure-regulating system 106 are closed.

In some embodiments, the method 500 includes operation 508, which includes injecting a molding material 113' into the hollow space 112a from the extruding system 110 through the feeding port 104 and the opening 112b, wherein the molding material 113' includes a polymeric material and a blowing agent. In some embodiments, operation 508 of the method 500 are similar to operation 405 of the method 400.

In some embodiments, the molding material 113' is made by the extruding system 110, and the molding material 113' is discharged out of the injection unit 150, and flows into the hollow space 112a of the component 112 via the discharging channel 111, the feeding port 104 and the opening 112b. In some embodiments, referring to FIG. 12, the molding material 113' is injected into the mold cavity 103 through the outlet 111ο and the feeding port 104. In some embodiments, the discharging channel 111 is at least partially surrounded by the molding device 100 upon the injection of the molding material 113'.

In some embodiments, one shot of the molding material 113' is injected to fill the entire hollow space 112a. As the component 112 is elastic, the component 112 and the hollow space 112a may expand during or after the injection of the molding material 113' into the hollow space 112a. A volume of the hollow space 112a is increased during or after the injection of the molding material 113'. In some embodiments, after the injection of the molding material 113' into the hollow space 112a, the hollow space 112a continues to expand because the molding material 113' undergoes the physical foaming inside the hollow space 112a.

In some embodiments, in operation 508, during the process of injecting the molding material 113' into the hollow space 112a, the pressure in the mold cavity 103 changes rapidly, and the pressure-sensing unit 1066 continuously senses the pressure in the mold cavity 103. In some embodiments, the molding material 113' is injected into the hollow space 112a from the feeding port 104, and the first predetermined pressure applies to the molding material 113'. In some embodiments, the molding material 113' and the gas G are disposed in the mold cavity 103 or the hollow space 112a, and the molding material 113' will expand and foam in the hollow space 112a.

In some embodiments, the molding material 113' is injected into the hollow space 112a from the feeding port 104 and the opening 112b, and thereby increasing the pressure in the mold cavity 103. In some embodiments, the pressure in the mold cavity 103 of the molding device 100 is raised above the first predetermined pressure. In some embodiments, the pressure in the mold cavity 103 of the molding device 100 is raised from the first predetermined pressure to a second predetermined pressure.

In some embodiments, after the molding material 113' is injected into the hollow space 112a within the mold cavity 103 having the first predetermined pressure, the pressure in the mold cavity 103 increases, and therefore, the setting of a second predetermined pressure ensures that the mold cavity 103 is maintained within a suitable pressure range. In some embodiments, when the mold cavity 103 reaches the second predetermined pressure, the injection of molding material 113' into the hollow space 112a is stopped.

In some embodiments, the process of injecting the molding material 113' into the hollow space 112a within mold cavity 103 having the first predetermined pressure lasts for less than 3 second. In some embodiments, due to the mold cavity 103 has the first predetermined pressure, the completion of the filling the molding material 113' may be last for less than 0.5 second. During the injecting period or at the moment of the completion of the injection, the pressure in the mold cavity 103 is sensed by the pressure-sensing unit 1066 in real time, and the pressure information is provided, so that the pressure-regulating system 106 can adjust the pressure in the mold cavity 103 in accordance with the pressure information, and hence, the pressure in the mold cavity 103 can be kept within the predetermined pressure range. In some embodiments, during the process of injection, the temperature of the discharging channel 111 is greater than that of the molding device 100. In some embodiments, a force is applied to the first mold 101 and/or the second mold 102 during or after the injection of the molding material 113', in order to maintain the mold cavity 103 or the hollow space 112a at a predetermined pressure level. In some embodiments, the pressure level is suitable for physical foaming.

In some embodiments, the method 500 includes operation 509 and operation 510. Operation 509 includes foaming the molding material 113' to form a foamed member 113, wherein the foamed member 113 is expanded within the mold cavity 103 during the formation of the foamed member 113. Operation 510 includes expanding the component 112 during or after the injection of the molding material 113' into the hollow space 112a. In some embodiments, operation 509 of the method 500 are similar to operation 406 of the method 400.

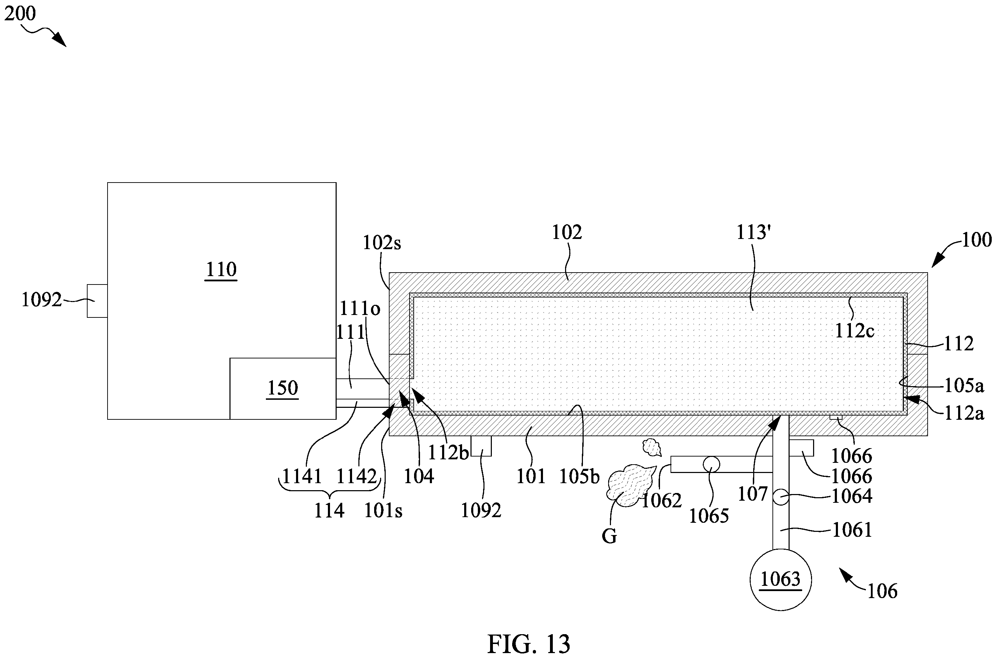

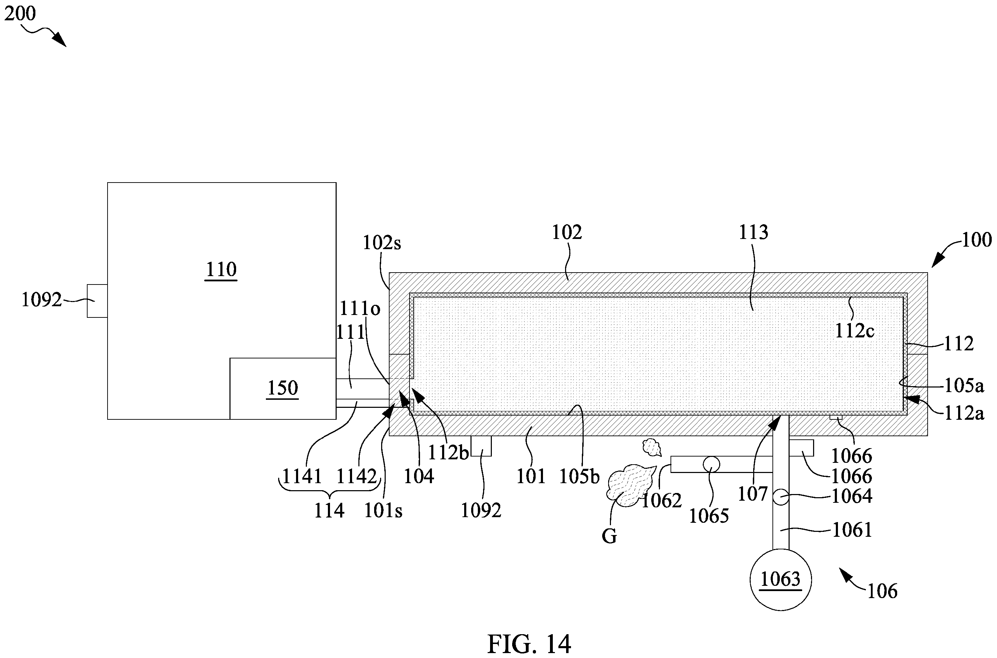

In some embodiments, after the injection of the molding material 113', the molding material 113' undergoes physical foaming within the mold cavity 103 as shown in FIG. 13 to become a foamed member 113 as shown in FIG. 14. Referring to FIG. 13 and FIG. 14, the component 112 is expanded during the formation of the foamed member 113 until the component 112 is in contact with an interior wall 105 of the mold cavity. In some embodiments, the hollow space 112a expands until the component 112 is entirely in contact with an interior wall 105 of the mold cavity 103.

In some embodiments, during the physical foaming of the molding material 113' or after the formation of the foamed member 113, the method 500 further includes discharging at least a portion of the gas G from the mold cavity 103 and/or the hollow space 112a. In some embodiments, the portion of the gas G is discharged from the mold cavity 103 after injecting the gas G into the mold cavity 103. In some embodiments, during operation 509 and operation 510, the gas G is discharged in less than 1 second from the mold cavity 103 through the pressure-regulating system 106 while the molding material 113' is foaming in the hollow space 112a or the foamed member 113 is formed. Due to the discharging of the portion of the gas G, the molding material 113' in the mold cavity 103 after the foaming process may have a lower density. In some embodiments, the gas G is discharged from the mold cavity 103 through the junction point 107. In some embodiments, the pressure in the mold cavity 103 is decreased from the second predetermined pressure.

In some embodiments, a pressure in the mold cavity 103 and/or the hollow space 112a is decrease to a third predetermined pressure through discharging the portion of the gas G. The pressure inside the mold cavity 103 or the hollow space 112a is reduced by discharging the portion of the gas G out of the mold cavity 103 and/or the hollow space 112a, and/or discharging a portion of the physical blowing agent released from the molding material 113' out of the mold cavity 103 and/or the hollow space 112a.

In some embodiments, when the pressure-sensing unit 1066 senses that the pressure in the mold cavity 103 is greater than the second predetermined pressure, a portion of the gas G in the mold cavity 103 is discharged until the pressure in the mold cavity 103 is within a predetermined pressure range. In some embodiments, the predetermined pressure range is between the first predetermined pressure and the second predetermined pressure. In some embodiments, the second valve 1065 is open and the portion of the gas G in the mold cavity 103 is discharged through the second gas conduit 1062.

In some embodiments, the method 500 includes operation 511. Operation 511 includes disengaging the first mold 101 and the second mold 102 after the foamed member 113 is formed.

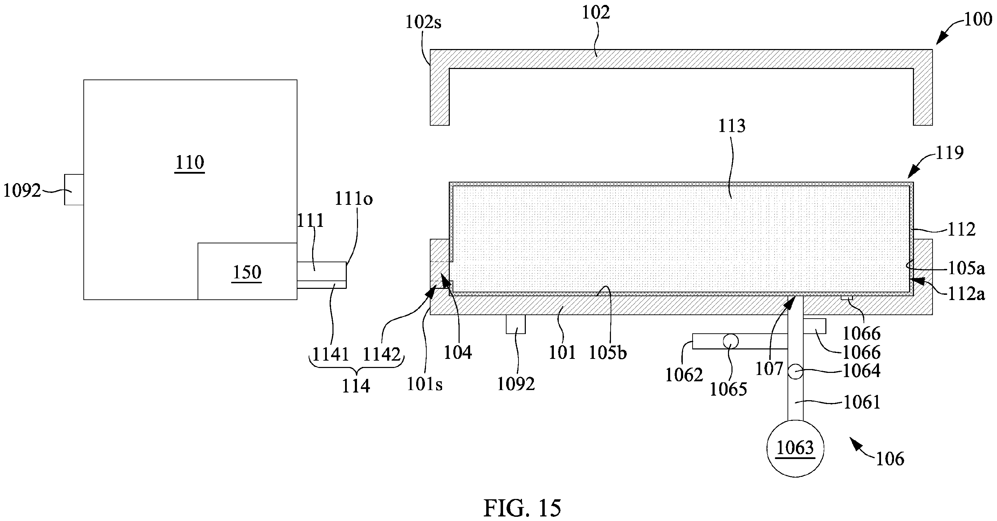

In some embodiments, referring to FIG. 15, after the formation of the foamed member 113, the discharging channel 111 is disengaged with the feeding port 104 before or after the disengagement of the first mold 101 and the second mold 102. An article 119 including the foamed member 113 and the component 112 is formed within the mold cavity 103 as shown in FIG. 14. The foamed member 119 is directly in contact with an inner surface 112c of the component 112. The article 119 thus formed is free from adhesive.

The outlet 111ο is disengaged with the feeding port 104. The molding device 100 is changed from the closed configuration (FIGS. 8 and 11 to 14) to an open configuration.

In some embodiments, the method 500 includes operation 512. Operation 512 includes removing the article 119 including the component 112 and the foamed member 113 from the molding device 100.

In some embodiments, referring to FIG. 16, after the disengagement of the first mold 101 and the second mold 102, the article 119 can be taken out from the mold cavity 103. In some embodiments, after the formation of the article 119, the article 119 is then picked out from the first mold 101. In some embodiments, the article 119 is picked out manually by human, or automatically by robot, robotic arm, gripper or the like.

In some embodiments, the method 500 further includes trimming a side of the article 119. Referring to FIG. 17, sides of the article 119 are trimmed, as a result, the article 119 having the foamed member 113 is disposed between a first portion 112d of the component 112 and a second portion 112e of the component 112 separated from the first portion 112d.

In some embodiments, a thickness of the component 112 is substantially less than a thickness of the foamed member 113. In some embodiments, an overall thickness T of the article 119 is substantially less than 2mm. In some embodiments, the overall thickness T of the article 119 is substantially less than 1mm. In some embodiments, the thickness of the foamed member 113 is substantially less than 1mm. In some embodiments, the thickness of the foamed member 113 is substantially less than 0.5mm. The foamed member 113 is directly attached to the first portion 112d and the second portion 112e, that no additional component or material (such as adhesive or the like) is disposed between them. In some embodiments, the component 112 is softer than the foamed member 113. In some embodiments, the foamed member 113 has a density of about 0.05 to about 0.5.

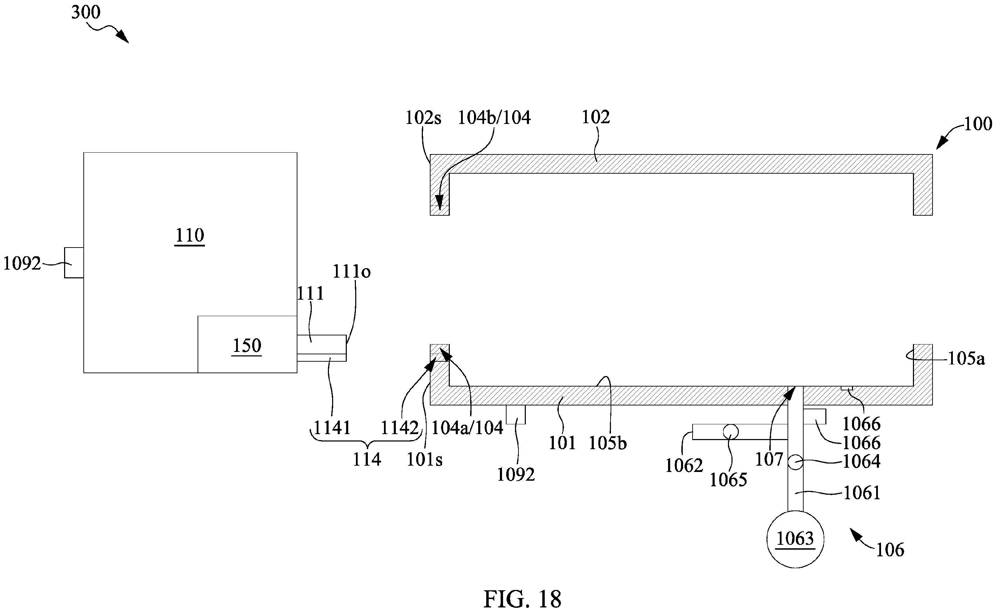

In some embodiments, the method 500 includes the following operations. In some embodiments, the steps described below can be repeated and performed automatically. In some embodiments, the above-mentioned injection molding system 300 as shown in FIG. 3 is used by the method 500. FIGS. 18 to 24 are schematic cross-sectional views of one or more operations of the method 500 for manufacturing an article in accordance with some embodiments of the present disclosure.

In some embodiments, in operation 503, the injection unit 150 and the molding device 100 are initially provided as shown in FIG. 18. The molding device 100 is in an open configuration, that the discharging channel 111 is disengaged with a feeding port 104, and the first mold 101 is disengaged with the second mold 102.

In some embodiments, the feeding port 104 includes a first partial port 104a at a first sidewall 101s of the first mold 101 and a second partial port 104b at a second sidewall 102s of the second mold 102. In some embodiments, the first partial port 104a and the second partial port 104b are separated from each other when the molding device 100 is in the open configuration as shown in FIG. 18.

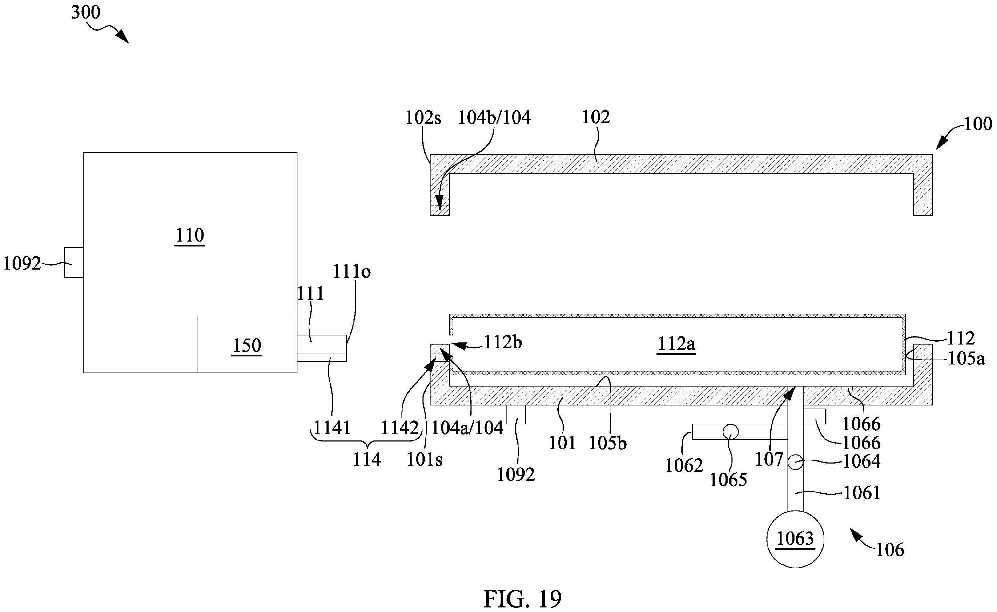

In some embodiments, in operation 504, the component 112 is disposed between the first mold 101 and the second mold 102 as shown in FIG. 19. In some embodiments, the opening 112b faces the first partial port 104a or the second partial port 104b, and the opening 112b is engagable with the first partial port 104a and/or the second partial port 104b.

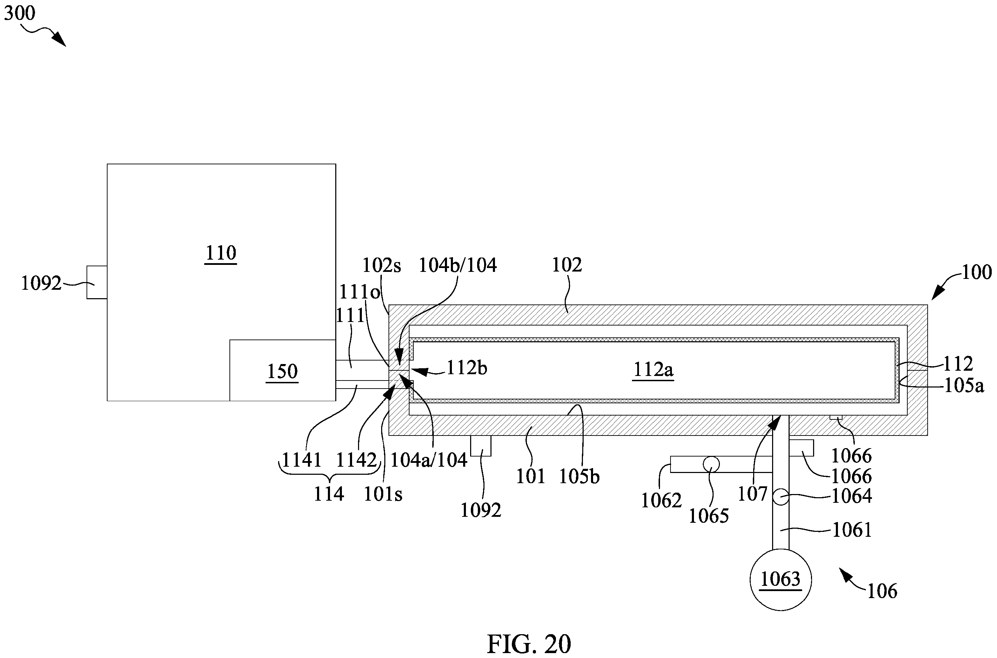

In some embodiments, in operation 505, referring to FIG. 20, the feeding port 104 is formed after the engagement of the first mold 101 with the second mold 102. In some embodiments, the feeding port is formed when the molding device 100 is in a close configuration. As a result, the feeding port 104 is formed and is communicable with the hollow space 112a when the opening 112b is engaged with the feeding port 104. In some embodiments, the formation of the feeding port 104 and the engagement of the opening 112b with the thus formed feeding port 104 are simultaneously.

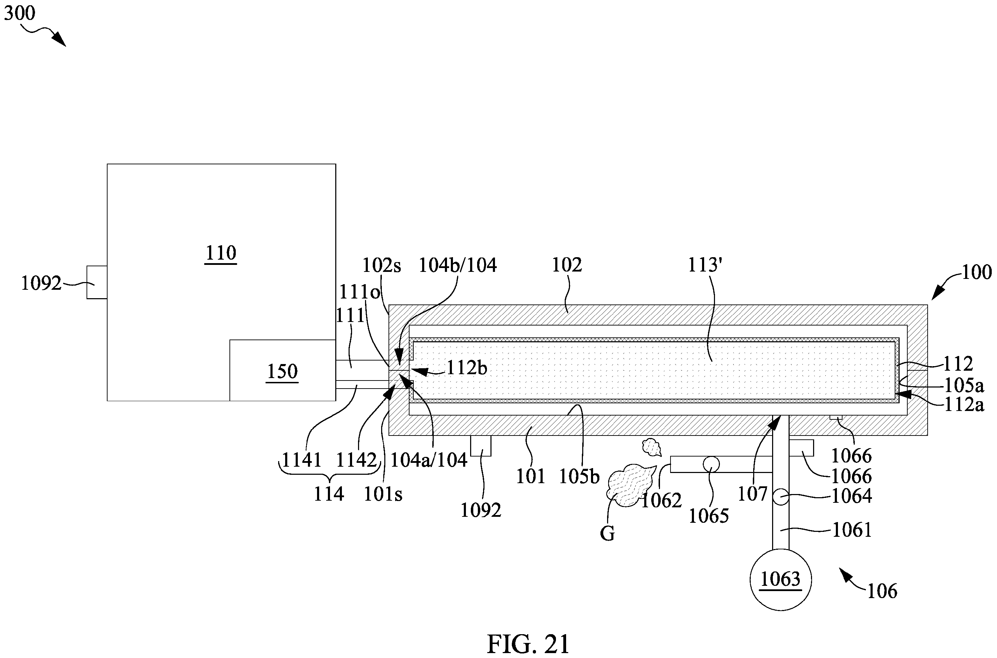

In some embodiments, in operation 507, referring to FIG. 21, the discharging channel 111 is engaged with the feeding port 104 and in contact with the first mold 101 and the second mold 102. In some embodiments, prior to or after the engagement of the first mold 101 and the second mold 102, the discharging channel 111 is engaged with the feeding port 104 as shown in FIG. 20, in a similar way as described above or shown in FIG. 11. In some embodiments, the discharging channel 111 is secured to the molding device 100. In some embodiments, a gas is injected into the mold cavity 103 and/or the hollow space 112a after the engagement of the first mold 101 and the second mold 102, so as to increase a pressure inside the mold cavity 103 and/or the hollow space 112a. In some embodiments, the gas G is air or the like. In some embodiments, a force is applied to the first mold 101 and/or the second mold 102 during or after the injection of the molding material 113', in order to maintain the mold cavity 103 and/or the hollow space 112a at a predetermined pressure level suitable for physical foaming.

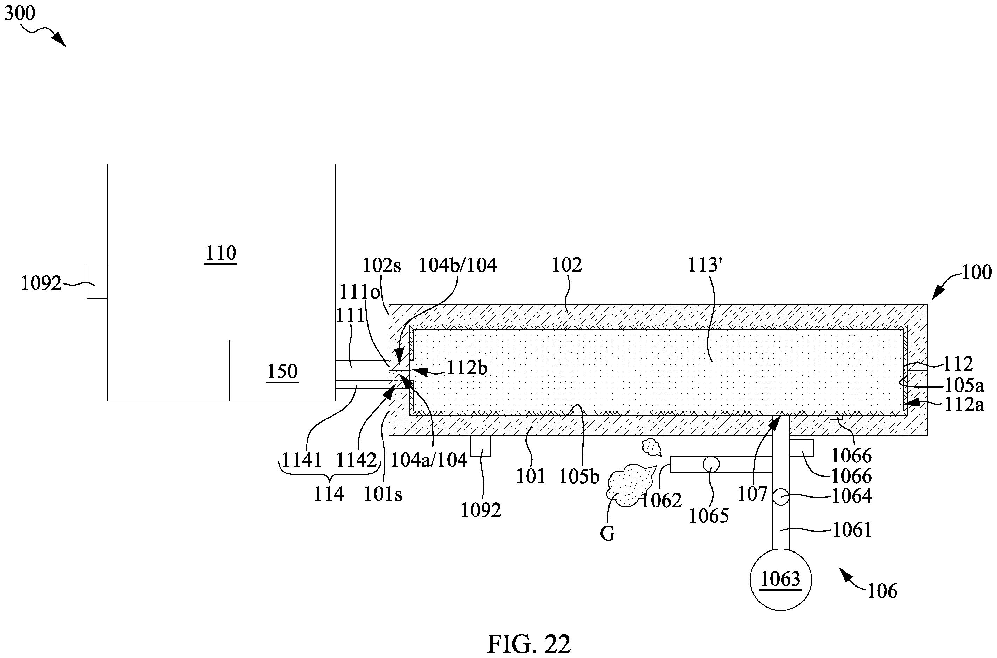

In some embodiments, in operation 508, referring to FIGS. 21 and 22, after the engagement of the first mold 101 and the second mold 102, the molding material 113' is injected into the hollow space 112a, in a similar way as described above or shown in FIGS. 12 and 13. In some embodiments, the gas G is injected into the hollow space 112a or the mod cavity 103 before injecting the molding material 113' into the hollow space 112a. The molding material 113' is discharged out of the injection unit 150, and flows into the hollow space 112a of the component 112 via the discharging channel 111, the feeding port 104 and the opening 112b. In some embodiments, one shot of the molding material 113' is injected to fill the entire hollow space 112a.

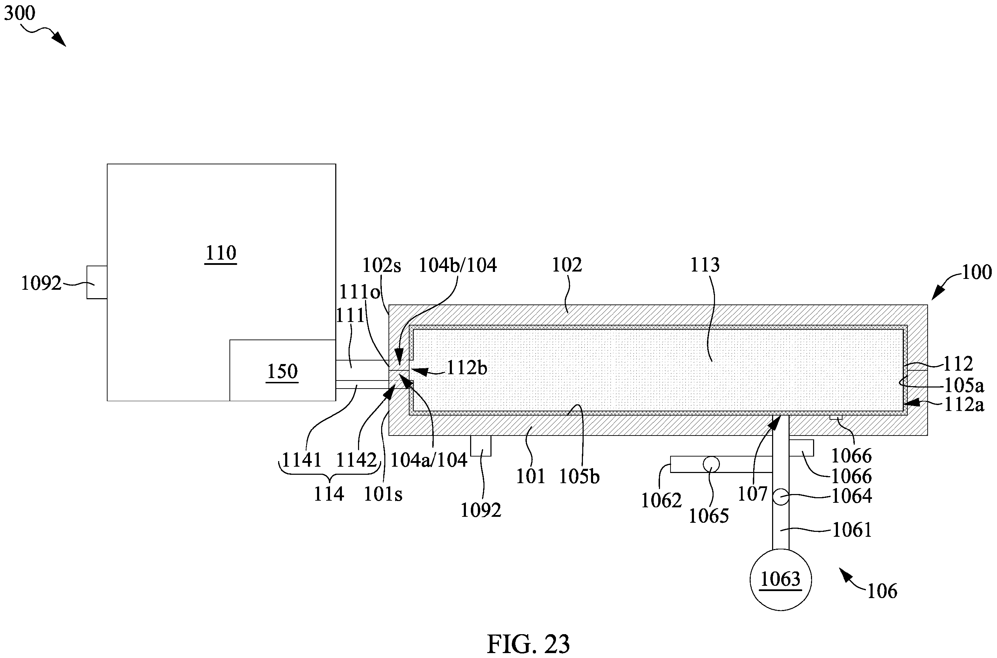

In some embodiments, in operation 509, referring to FIGS. 22 and 23, after the injection of the molding material 113', the molding material 113' undergoes physical foaming within the mold cavity 103 to become a foamed member 113, in a similar way as described above or shown in FIGS. 13 and 14. In some embodiments, during the physical foaming of the molding material 113' or after the formation of the foamed member 113, the pressure inside the mold cavity 103 and/or the hollow space 112a is reduced by discharging at least a portion of the gas G out of the mold cavity 103 and/or the hollow space 112a, and/or discharging a portion of the physical blowing agent released from the molding material 113' out of the mold cavity 103 and/or the hollow space 112a.

In some embodiments, in operation 510, still referring to FIGS. 22 and 23, as the component 112 is elastic, the molding material 113' may expand during or after the injection of the molding material 113' into the hollow space 112a. A volume of the hollow space 112a is increased during or after the injection of the molding material 113'. In some embodiments, the hollow space 112a expands until the component 112 is entirely in contact with an interior wall 105 of the mold cavity 103 as shown in FIG. 22. In some embodiments, after the injection of the molding material 113' into the hollow space 112a, the hollow space 112a continues to expand because the molding material 113' undergoes the physical foaming inside the hollow space 112a.

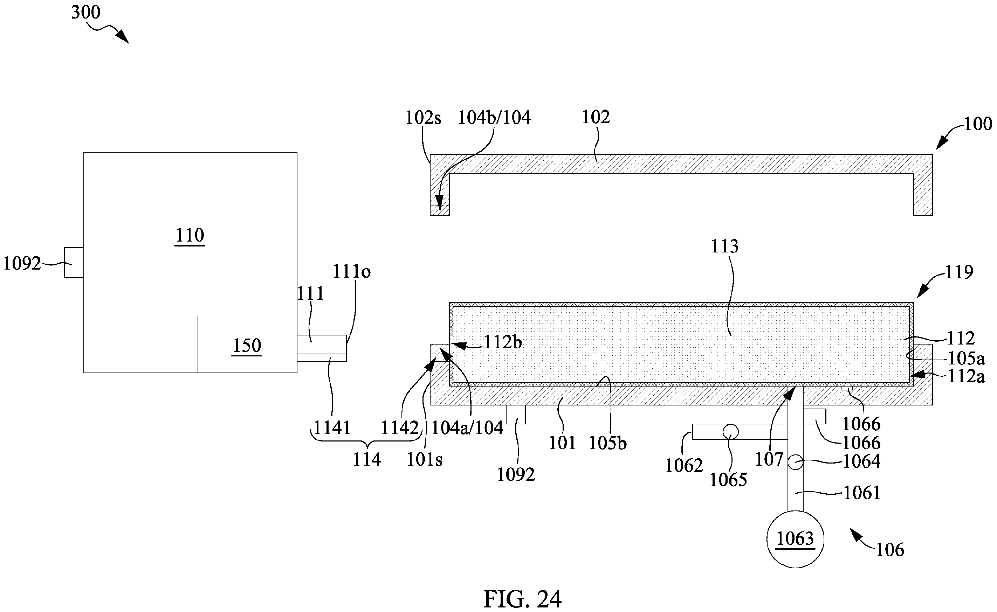

In some embodiments, in operation 510, referring to FIG. 24, after the foamed member 113 is formed within the mold cavity 103, the first mold 101 is disengaged with the second mold 102 in a similar way as described above or shown in FIG. 15. In some embodiments, the discharging channel 111 is disengaged with the feeding port 104 before or after the disengagement of the first mold 101 and the second mold 102. The thus formed article 119 is similar to the one as shown in FIG. 16. In some embodiments, after taking the article 119 out of the mold cavity 103, sides of the article 119 are trimmed as shown in FIG. 17. As a result, the article 119 having the foamed member 113 between the first portion 112d of the component 112 and the second portion 112e of the component 112 is formed.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions, and alterations herein without departing from the spirit and scope of the present disclosure.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein, may be utilized according to the present invention. Accordingly, the appended claims are intended to include within their scope such processes, machines, manufacture, compositions of matter, means, methods and steps.

## Claims

1. A method of manufacturing an article, comprising:
providing a molding device having a first mold and a second mold;
disposing a component between the first mold and the second mold, wherein the component includes a hollow space and an opening in communication with the hollow space;
engaging the opening with the first mold or the second mold;
engaging the first mold with the second mold to form a mold cavity surrounding the component, wherein the opening is engaged with a feeding port of the molding device communicable with the hollow space;
injecting a molding material into the hollow space through the feeding port and the opening, wherein the molding material includes a polymeric material and a blowing agent; and
foaming the molding material to form a foamed member,
wherein the foamed member is in contact with an inner surface of the component.

2. The method of Claim 1, further comprising:
expanding the component during or after the injection of the molding material into the hollow space,
wherein the component is expanded until the component is in contact with an interior sidewall of the mold cavity.

3. The method of Claim 1 or 2, wherein the feeding port is formed after the engagement of the first mold with the second mold.

4. The method of any one of Claims 1-3, wherein the feeding port is disposed at a first sidewall of the first mold or a second sidewall of the second mold.

5. The method of any one of Claims 1-4, wherein the feeding port is disposed between the first mold and the second mold, the feeding port includes a first partial port at the first mold and a second partial port at the second mold, and the first partial port is aligned with the second partial port when the molding device is in a closed configuration.

6. The method of any one of Claims 1-5, wherein the opening and a portion of the component adjacent to the opening are disposed within the feeding port when the opening is engaged with the feeding port.

7. The method of any one of Claims 1-6, prior to the injection of the molding material, further comprising:
injecting a gas into the mold cavity or the hollow space after the engagement of the first mold and the second mold to increase a pressure inside the mold cavity or the hollow space.

8. The method of any one of Claims 1-7, after the injection of the molding material, further comprising:
discharging a gas from the mold cavity or the hollow space to decrease a pressure in the mold cavity or the hollow space.

9. A method of manufacturing an article, comprising:
providing a molding device having a first mold and a second mold;
disposing a component between the first mold and the second mold, wherein the component includes a hollow space and an opening in communication with the hollow space;
engaging the opening with the first mold or the second mold;
engaging the first mold with the second mold to form a mold cavity surrounding the component, wherein the opening is engaged with a feeding port of the molding device communicable with the hollow space, the feeding port is disposed at a sidewall of the molding device, and the component is disposed within the mold cavity;
injecting a molding material into the hollow space through the feeding port and the opening; and
foaming the molding material to form a foamed member,
wherein the hollow space is expanded within the mold cavity during the formation of the foamed member.

10. The method of Claim 9, further comprising:
applying a force to the molding device during or after the injection of the molding material to maintain the mold cavity or the hollow space at a predetermined pressure level.

11. The method of Claim 9 or 10, further comprising:
disengaging the first mold and the second mold after the foamed member is formed, and
removing the article including the component and the foamed member from the molding device.

12. The method of Claim 11, further comprising trimming a side of the article, wherein the foamed member is disposed between a first portion of the component and a second portion of the component separated from the first portion.

13. The method of any one of Claims 9-11, wherein the component is flexible or elastic.

14. The method of any one of Claims 9-11 and 13, wherein the feeding port is disposed between the first mold and the second mold.

15. The method of any one of Claims 9-11 and 13-14, wherein a portion of the component adjacent to the opening is inserted into the feeding port when the opening is engaged with the feeding port.
